# EUROPÄISCHE PATENTSCHRIFT

(11) **EP 4 059 654 B1**
(45) Veröffentlichungstag und Bekanntmachung des Hinweises auf die Patenterteilung: **24.06.2026**
(21) Anmeldenummer: 22163044.5
(22) Anmeldetag: 18.03.2022
(51) Int. Cl.: B23K 26/0622, B23K 26/066, B23K 26/067, B23K 26/08, B23K 26/382

(54) **VERFAHREN UND FERTIGUNGSSYSTEM ZUR FERTIGUNG EINES FLACHPRODUKTS MIT EINER PERFORIERTEN STRUKTUR**
METHOD AND MANUFACTURING SYSTEM FOR MANUFACTURING A FLAT PRODUCT WITH A PERFORATED STRUCTURE
PROCÉDÉ ET SYSTÈME DE FABRICATION DESTINÉS À LA PRODUCTION D'UN PRODUIT PLAT D'UNE STRUCTURE PERFORÉE

(30) Priorität: 19.03.2021 DE 102021106769
(43) Veröffentlichungstag der Anmeldung: 21.09.2022
(73) Patentinhaber: Pulsar Photonics GmbH, 52134 Herzogenrath (DE)
(72) Erfinder: Ryll, Joachim, 52159 Roetgen (DE); Eifel, Stephan, 50679 Köln (DE); Holtkamp, Jens, 41849 Wassenberg (DE)
(74) Vertreter: Patentanwälte Bauer Vorberg Kayser

(56) Entgegenhaltungen:
- WO-A1-2010/112449
- US-A1- 2015 059 293
- US-B1- 6 285 000

## Beschreibung

Die vorliegende Erfindung betrifft ein Verfahren und Fertigungssystem zur Fertigung eines mit einer perforierten Struktur versehenen Flachprodukts.

Es ist aus dem Stand der Technik grundsätzlich bekannt, perforierte Strukturen in Substrate einzubringen, beispielsweise durch mechanisches Bohren. Dies ist häufig mit einem hohen Zeitaufwand und einer relativ geringen Fertigungsgeschwindigkeit assoziiert. Bei einer perforierten Struktur handelt es sich um eine Mehrzahl (Muster, Array oder dergleichen) von in dem Substrat ausgebildeten Lochöffnungen, die vorzugsweise Substrat-durchgängig sind (Durchgangsöffnungen). Die Substrate können dabei vielfältiger Natur sein und aus unterschiedliche Materialien gefertigt sein, beispielsweise aus Kunststoff, Keramik, Metall, Metalllegierungen, Textilien, Naturstoffen oder aus Verbundmaterialien. Wie nachfolgend dargelegt, können perforierte Strukturen auch im Wege einer Laserbearbeitung in ein geeignetes Substrat eingebracht werden.

Im Wege der kontinuierlich fortschreitenden Entwicklung der Lasertechnologie ist es seit vielen Jahren bekannt, Laser zur Bearbeitung von unterschiedlichsten Substraten einzusetzen. So kommen diese beispielsweise im Bereich der Fertigung elektronischer Bauelemente zum Einsatz, hierbei insbesondere zur Bearbeitung von jenen die Bauelemente tragenden Leiterplatten oder Folien. Zunächst wurden dazu vornehmlich CO₂-Laser eingesetzt, inzwischen haben jedoch UV-Nanosekundenlaser eine besondere Relevanz bei der Laserbearbeitung erlangt. Grundsätzlich kann sowohl CO₂- als auch UV-Laserstrahlung zur Bearbeitung von Materialien wie Kunststoffen eingesetzt werden. Die Auswahl der Laserquelle hängt letztlich von den Absorptionseigenschaften des zu bearbeitenden Materials ab. Grundsätzlich muss das zu bearbeitende Material für eine abtragende Bearbeitung (also beispielsweise der Ausbildung einer Laserbohrung) die eingestrahlte Laserstrahlung (z.B. die von einem CO₂ oder einem UV-Laser emittierte Laserstrahlung) zumindest partiell absorbieren. Dabei ist es grundsätzlich bekannt, Laserstrahlung zur Ausführung von Schweiß-, Schneid-, Fräs- und Bohrvorgängen einzusetzen. Die vorliegende Erfindung konzentriert sich auf den Einsatz des Laserbohrens.

Bei der Ausbildung von Laserbohrungen wird mit gepulster oder kontinuierlicher Laserstrahlung Material des zu bearbeitenden Werkstoffs - insbesondere im Bereich der auszubildenden Bohrung - abgetragen. Die nachfolgenden Ausführungen nehmen jedoch insbesondere auf die Verwendung gepulster Laserstrahlung Bezug.

Bei der Materialabtragung mit gepulster Laserstrahlung wird die Laserstrahlung von dem zu bearbeitenden Substrat absorbiert. Dabei kann die Strahlungsenergie beispielsweise in Wärme umgesetzt werden. Auch können in Folge des Strahlungseintrags chemische Verbindungen aufgebrochen werden (sog. chemische Ablation). Entsprechend wird das Substrat lokal innerhalb kürzester Zeit erwärmt, das Substratmaterial lokal aufgeschmolzen und verdampft bzw. ionisiert. Bei Verwendung von Ultrakurzpuls-Lasern kann das bearbeitete Material gar einer Sublimation unterliegen. Maßgeblichen Einfluss auf den Abtragungsvorgang hat die Wellenlänge der verwendeten Laserstrahlung, bei gepulsten Lasern ist ferner die Pulsenergie und die Pulsdauer der applizierten Laserpulse von Bedeutung. Diese Stellgrößen werden je nach zu bearbeitendem Material und dem gewünschten Bohrungsdurchmesser auf den konkret vorliegenden Einzelfall angepasst. Die Bohrungstiefe kann beispielsweise über die Anzahl der applizierten Laserpulse bzw. die Bestrahlungsdauer eingestellt werden.

Die mit dem Laserbohren im Vergleich zu anderen Bohrverfahren einhergehenden Vorteile liegen insbesondere darin, dass der Bohrvorgang berührungs- und verschleißfrei, mit hoher Präzision und in hoher Geschwindigkeit durchgeführt werden kann. Des Weiteren sind selbst kleinste Durchmesser und hohe Aspektverhältnisse zugänglich. Beispielsweise können Bohrungsdurchmesser von bis zu 20 µm ausgebildet werden. Ferner weisen die im Wege des Laserbohrens ausgebildeten Bohrungen in der Regel scharfe Kanten sowie Materialfreiheit am Bohrlochein- bzw. austritt auf. Häufig weisen die Bohrungen jedoch keine ideal zylindrische Querschnittsgeometrie auf, sondern sind konisch zulaufend ausgebildet. Dies ist jedoch für vielerlei Applikationen unproblematisch, solange die Bohrungen in reproduzierbarer Geometrie ausgebildet sind.

Beim Laserbohren kommt insbesondere das Einzelpulsbohren, das Perkussionsbohren und das Trepanieren zur Anwendung. In der genannten Reihenfolge nimmt die zur Ausbildung der Bohrung benötigte Anzahl an Laserpulsen zu. Beim Einzelpulsbohren wird ein einziger Laserpuls auf einen bestimmten Bereich des zu bearbeitenden Substrats appliziert. Dabei wird der Bohrungsdurchmesser im Wesentlichen durch die verwendete Pulsenergie und den Fokusdurchmesser bestimmt. Jedoch ergeben sich in Bezug auf eine flexible Variation des Bohrungsdurchmessers Einschränkungen. Beim Perkussionsbohren erfolgt die Ausbildung der Bohrung durch Applizieren einer Serie von aneinandergereihten Einzelpulsen auf die zu bearbeitende Stelle des Substrats. Gegenüber dem Einzelpulsbohren können mit diesem Verfahren bei gleicher Laserquelle größere Bohrtiefen erreicht werden, also grundsätzlich Materialien mit größerer Materialstärke mir Durchgangsöffnungen versehen werden. Von Trepanieren spricht man, wenn der Laserstrahl entlang einer Kreiskontur über die Werkstückoberfläche geführt und das Loch durch den gepulsten Laserstrahl ausgeschnitten wird. Das Verfahren entspricht damit dem Perkussionsbohren mit nachfolgendem Kreisschneiden. Die vorliegende Erfindung kann jedes der geschilderten Laserbohrprinzipien umfassen.

Beim Laserbohren können verschiedenste Laserstrahlungsquellen zum Einsatz kommen. Für einen präzisen Materialabtrag sollte eine möglichst kleine Fokussierung mit einem möglichst kurzwelligen Laser angestrebt werden. Im Zuge der Entwicklung leistungsfähigerer und langlebiger Laserstrahlungsquellen für den UV-Bereich, werden CO₂-Laser nur noch relativ selten eingesetzt. Auch Excimer-Laser kommen beim Laserbohren heutzutage kaum noch zum Einsatz. Standardmäßig werden jedoch UV-Nanosekundenlaser eingesetzt.

Weitaus häufiger werden beim Laserbohren die sogenannten Festkörperlaser eingesetzt, insbesondere Nd:YAG-Laser. Diese Laser können in Bezug auf die erzielbare Pulsdauer, Pulsenergie und Wellenlänge passgenau auf die jeweilige Anwendung zugeschnitten sein.

Das Verfahren des Laserbohrens eignet sich insbesondere zur Ausbildung von Durchgangsöffnungen (synonym: Lochöffnungen) in einem Flachprodukt wie einer Metallfolie (Substrat). Die für eine Mikrofilter- oder Mikrosieb-Applikation im Substrat benötigten Durchgangsöffnungen ragen vollständig durch das Substrat hindurch. Das Laserbohren eignet sich sowohl zur Bearbeitung von Substraten mit einer Dicke (Materialstärke) von einem bis mehreren Millimetern, gleichsam können aber auch Laserbohrungen an Dünnschichtsubstraten (z.B. Metallfolien mit Schichtdicken von bis zu 100 µm) vorgenommen werden.

Typischerweise weisen die von einer Laserstrahlungsquelle erzeugten Laserstrahlen in Bezug auf ihren Strahlenquerschnitt ein Gauß'sches Intensitätsprofil auf. Über geeignete Strahlformungstechniken können Laserstrahlen jedoch unter Abänderung der Intensitätsprofile geformt werden. Für den Prozess des Laserbohrens ist dies deshalb von Interesse, da die Bohrung so direkt mit dem richtigen Durchmesser ausgebildet werden kann. Dies kommt insbesondere bei einer Verfahrensführung zum Tragen, bei welcher nach der Positionierung des geformten Laserstrahls auf dem Werkstück eine Mehrzahl von Laserpulsen auf das Werkstück appliziert werden. Durch die Verwendung von geformter Laserstrahlung kann die auf das Werkstück eingebrachte Energiedichte bei gleichzeitiger Leistungserhöhung reduziert werden. Durch geeignete Intensitätsverteilungen (beispielsweise eine ringförmige Intensitätsverteilung) kann die eingebrachte Strahlungsenergie bei gegebenem Bohrungsdurchmesser - im Vergleich zu einem klassisch gaußförmigen Intensitätsprofil - intelligenter auf der bestrahlten Fläche verteilt werden. Bei Verwendung von Laserstrahlung mit ringförmiger Intensitätsverteilung wird im Vergleich zu einem Laserstrahl mit gaußförmiger Intensitätsverteilung eine kleinere Fläche bestrahlt. Dabei wird eine Wärmeleitung bzw. Wärmeakkumulation ins Ringinnere für den Abtragungsprozess ausgenutzt. Gleichzeitig kann - im Vergleich zur Verwendung eines Gaußstrahls - durch die Verwendung einer ringförmigen Intensitätsverteilung eine schärfere Kontur der Laserbohrungen bei im Vergleich deutlich kleinerer Pulsenergie erzielt werden. Bei Verwendung von Laserstrahlung mit einer Top-Hat Intensitätsverteilung wird im Vergleich zu Laserstrahlung mit gaußförmiger Intensitätsverteilung - aufgrund des flacheren Profils - eine geringere Pulsenergie benötigt. Auch die Bohrungstiefe der Laserbohrungen kann von der vorherrschenden Intensitätsverteilung in Kombination mit einer bestimmten Pulsdauer und Anzahl der Laserpulse eingestellt werden.

Aus der koreanischen Patentanmeldung KR 20180060830 ist die Verwendung von gepulsten und geformten Laserstrahlen zur Ausbildung von VIA-Laserbohrungen in Leiterplatten bekannt. Dabei wird der von einer Laserstrahlungsquelle ausgehende Laserstrahl über eine Modulationseinheit, insbesondere eine LCOS-(Liquid Crystal on Silicon) Einheit, dahingehend moduliert, dass in einem Bearbeitungsbereich der Leiterplatte ein Laserspot mit einer bestimmten Intensitätsverteilung erzeugt wird. Beschrieben ist insbesondere die Erzeugung von - bezogen auf eine Strahlachse des Laserstrahls - ringförmigen Intensitätsprofilen. Der LCOS-Einheit können Linsen zur Fokussierung des Laserstrahls auf das Werkstück nachgeordnet sein. Bei der dort beschriebenen Vorrichtung bzw. dem beschriebenen Verfahren bleibt offen, ob und ggf. wie die zu bearbeitende Leiterplatte relativ zu der Laser-Bohrvorrichtung positioniert werden kann. Für den Fall, dass gleich mehrere Stellen der Leiterplatte mit Bohrungen versehen werden sollen, muss das Werkstück manuell in Bezug zur Bohrvorrichtung repositioniert werden. Damit einher gehen einerseits Präzisionsverluste bei der Positionierung des Werkstücks und andererseits eine Erhöhung der Bearbeitungszeit. Eine solche Vorrichtung ist für eine schnelle Ausbildung von Laserbohrungen in einem Substrat ungeeignet.

Um die Bearbeitungsgeschwindigkeit beim Laserbohren zu erhöhen, ist es bekannt, Laserstrahlung an Spiegeln zu reflektieren und auf bestimmte Stellen einer zu bearbeitenden Substratoberfläche auszulenken. Eine Anordnung mehrerer derartiger Spiegel können in einer Baueinheit zusammengefasst sein und einen Spiegelscanner ausbilden. Bekannt sind beispielsweise galvanometrisch angetriebene Spiegelscanner (Galvanometerscanner), deren zugehörige Spiegel über einen Drehantrieb um einen definierten Winkel verdreht werden können. Auf diese Weise kann ein auf einen solchen Spiegel einfallender Laserstrahl auf unterschiedliche Stellen des Werkstücks gerichtet werden. In der genannten Publikation KR 20180060830 findet zwar auch die grundsätzliche Eignung von "Scannern" in Verbindung mit der dort beschriebenen Vorrichtung zum Laserbohren Erwähnung, die konkrete technische Umsetzung ist dort jedoch nicht beschrieben.

Galvanometerscanner können mit Spezialobjektiven, wie dem von der Anmelderin angebotenen Produkt Microscan-Extension MSE kombiniert werden, um die Auflösung weiter zu erhöhen. Durch den einfachen Austausch von einem herkömmlichen Objektiv mit einem solchen Spezialobjektiv können bekannte Laserscansysteme zu einem Microspot-Scanning-System erweitert werden. Die Kombination von einem "klassischen" Galvanometerscanner und einem solchen Spezialobjektiv ermöglicht eine hoch präzise Bearbeitung mit einem Fokusdurchmesser von weniger als 5 µm. Ein solches Spezialobjektiv (MSE) kann auch im Rahmen der Erfindung zum Einsatz kommen und mit einer koaxialen Erkennungseinrichtung (z.B. Kamera) samt automatischer Tiefenschärferegelung oder in Kombination mit einem automatisiert betriebenen z-Fokusshifter oder einem Hubtisch verwendet werden. Letztere Merkmale seien an anderer Stelle dieser Anmeldung noch im Detail diskutiert.

Zur Laserbearbeitung unterschiedlicher Stellen eines Substrats ist es ferner bekannt, das Substrat relativ zu einem stationären Laserstrahl zu bewegen. Auch kann laserseitig eine Bewegungseinheit vorgesehen sein, mit der ein Laserspot oder ein festgelegtes Scanfeld (als Scanfeld ist jener Bereich des Substrats zu verstehen, der durch die Ablenkung des Laserstrahls an dem Galvanometerscanner zugänglich ist) relativ zu einem stationären Werkstück (z.B. Flachprodukt) bewegt werden kann. Verwiesen sei beispielsweise auf den Offenbarungsgehalt der WO 2017/044646 A1. Die Ausbildung einer Laserbearbeitungsvorrichtung, bei der nur eine Komponente (sei es der Laserbearbeitungskopf oder eine Substratpositionierungseinheit) relativ zu einer stationären weiteren Komponente bewegt wird, ist jedoch nachteilig, da dadurch nur relative geringe Bearbeitungsgeschwindigkeiten erreicht werden können. Insbesondere für den Fall, dass eine Vielzahl von Laserbohrungen in einem Substrat ausgebildet werden sollen, limitiert eine solche Anordnung die Prozessökonomie. Mit der aus der WO 2017/044646 A1 bekannten Bearbeitungsvorrichtung können zwar auch Bohrungen mit Durchmessern von > 100 µm in hoher Geschwindigkeit ausgebildet werden, allerdings weist die dortige Vorrichtung ein aus zwei überlagerten Scannern zusammengesetztes Scansystem auf, dessen Aufbau und Ansteuerung technisch aufwändig ist. Ferner erlaubt die dortige Vorrichtung keinen Einsatz geformter Laserstrahlung im Perkussionsbohrverfahren.

Zur Positionierung eines Laserspots an mehreren zu bearbeitenden Stellen eines Substrats, ist es weiterhin bekannt, das Substrat und den Laserspot simultan zu bewegen, bzw. die Scanbewegung des Laserspots und die Substratbewegung zu synchronisieren. Beachtlich ist dabei insbesondere eine Synchronisierung unterschiedlicher Bewegungsgeschwindigkeiten. Denn im Vergleich zur Bewegungsgeschwindigkeit des Substrats (beispielsweise über einen xy-Tisch), ist die beispielsweise von einem Galvanometerscanner erzeugte Bewegungsgeschwindigkeit des Laserspots um ein Vielfaches höher. Bekannt ist ein solches Vorgehen beispielsweise aus der US 2018/0339364 A1 und der US2015059293 A1.

Die aus dem Stand der Technik bekannten Laserbearbeitungsvorrichtungen, insbesondere jene auf die Mikrostrukturierung von Substraten optimierten Laserbearbeitungsvorrichtungen, sind in der Regel für die Bearbeitung einzelner Substrate ausgelegt, wobei die Laserbearbeitung oftmals unter der Prämisse einer möglichst hohen Bearbeitungsqualität und einer präzisen Substratbearbeitung bei oftmals komplexen Bearbeitungsaufgaben (z.B. komplexe Strukturierungsmuster) ausgeführt wird. Entsprechend sind die dazu eingesetzten Laserbearbeitungsvorrichtungen auf diese Erfordernisse optimiert.

Zunehmend besteht jedoch ein Bedarf, im Wege einer Laserbearbeitung ausgebildete perforierte Strukturen in Substraten auch bei der Serienfertigung, z.B. von Mikrofiltern oder Mikrosieben, einzusetzen. Dies bedeutet, dass die dazu verwendeten Laserbearbeitungsvorrichtungen im Vergleich zu den auf eine Einzelbearbeitung ausgelegten Laserbearbeitungsvorrichtungen einen höheren Substratdurchsatz gewährleisten, gleichzeitig aber auch eine hohe Bearbeitungsqualität bereitstellen müssen. Ferner besteht in diesem Zusammenhang zunehmend Bedarf, Laserbearbeitungsvorrichtungen in Fertigungssysteme zu integrieren, d.h. die Laserbearbeitungsvorrichtung muss in einen Substratstrom bzw. eine Substratflussrichtung eines Fertigungssystems eingegliedert werden. Bisher sind diesbezüglich nur unzureichende Lösungen bekannt. Insbesondere fehlt es den bisherigen Lösungen an einer ausreichenden Kontrolle der Bearbeitungsqualität.

Mikrofilter kommen in vielfältigen industriellen Anwendungsbereichen zum Einsatz. Sie können zur Aufbereitung von fest-flüssig Gemischen (z.B. Abwasser), Treibstoffen oder bei Anwendungen in der Lebensmittel- und Kosmetikindustrie verwendet werden. Auch können Mikrofilter bei Zerstäubungs-Applikationen eingesetzt werden. Derartige Mikrofilter zeichnen sich durch ihre geringe Materialstärke, ein relativ geringes Gewicht und eine perforierte Struktur aus. Die perforierte Struktur wird durch eine Vielzahl von Durchgangsöffnungen gebildet, die für Tröpfchen, Partikel oder Teilchen mit einem unterhalb des Durchmessers der Durchgangsöffnung liegenden Durchmesser durchlässig sind. Nebst der Verwendung als Mikrofilter, können mit einer perforierten Struktur versehene Substrate in einer Vielzahl von weiteren Anwendungen zum Einsatz kommen, z.B. bei Mikrosieben, Düsen, Rohren, in der Mikrofluidik etc. Für vielerlei der vorgenannten Applikationen erscheinen metallische Substrate besonders geeignet. In Form von dünnen (d.h. eine geringe Materialstärke aufweisenden) Flachprodukten, beispielsweise Metallfolien, wird für die o.g. Applikationen einerseits eine ausreichende mechanische Stabilität gewährleistet, andererseits aber auch eine ausreichende Flexibilität. Metallfolien lassen sich zudem einfach und kostengünstig in Form von Zuschnitten oder auf Rollen lagern und transportieren. Im Vergleich zu textilen Geweben oder Kunststofffolien zeichnen sich Metallfolien durch ihre besondere Druckfestigkeit aus, was für Filter- und Siebapplikationen vorteilhaft ist. Zudem erfahren Filter- oder Siebe aus Metallfolien keine Veränderung der Porengrößen.

Klassischerweise werden metallische Mikrofilter oder Mikrosiebe mit Ätzverfahren oder durch elektrochemische Abscheidungsverfahren gefertigt. Im Wege einer Laserbearbeitung (insbesondere dem Laserbohren) gefertigte Mikrofilter und Mikrosiebe bieten hier eine Alternative. Denn im Wege einer solchen Laserbearbeitung gefertigte Mikrofilter und Mikrosiebe lassen sich aus unterschiedlichsten Materialien und in beliebiger Lochdichte herstellen. Das Laserbohrverfahren ist gegenüber dem klassischen Ätzverfahren bei der Herstellung von Mikrofiltern und Mikrosieben vorteilhaft, da damit ein deutlich größeres Aspektverhältnis erzielbar ist.

Insbesondere die Einbringung von Durchgangsöffnungen mit Durchmessern im einstelligen Mikrometer-Bereich in Substrate von geringer Schichtdicke (z.B. Flachprodukte wie Metallfolien mit Schichtdicken bis 100 µm) ist technisch anspruchsvoll. Zudem gestaltet sich die Serienproduktion derartiger Produkte aufgrund der hohen Qualitätsanforderungen bei gleichzeitig erwünschtem hohem Fertigungsdurchsatz häufig als problematisch.

Hier schafft die Erfindung Abhilfe, der die Aufgabe zugrunde liegt, ein Verfahren und Fertigungssystem zur Fertigung eines mit einer perforierten Struktur versehenen Flachprodukts bereitzustellen, womit eine schnelle Fertigung von perforierten Flachprodukten im Serienmaßstab bei Gewährleistung der erforderlichen Qualitätsanforderungen eröffnet wird. Auch liegt der Erfindung die Aufgabe zugrunde, ein mit einer perforierten Struktur versehenes Flachprodukt bereitzustellen, welches sich schnell und im Serienmaßstab mit hoher Qualität fertigen lässt.

Zur Lösung dieser Aufgabe wird ein Verfahren mit den Merkmalen des Anspruchs 1 vorgeschlagen wie auch ein Fertigungssystem mit den Merkmalen des Anspruchs 11.

Die Erfindung betrifft zunächst ein Verfahren zur Fertigung eines mit einer perforierten Struktur versehenen Flachprodukts, aufweisend die folgenden Verfahrensschritte:
a) Bereitstellen eines Flachprodukts in einem Flachprodukt-Reservoir;
b) Anordnen des bereitgestellten Flachprodukts in einer Flachprodukt-Aufnahmeeinheit;
c) Laserbearbeiten des Flachprodukts unter Einsatz einer Laserbearbeitungsvorrichtung: Erzeugen, Ausrichten und Applizieren eines oder mehrerer gepulster Laserstrahlen auf eine oder mehrere Bearbeitungsstellen in einem vorgegebenen Bearbeitungsfeld des Flachprodukts, wodurch in dem Flachprodukt an der oder den Bearbeitungsstelle(n) Lochöffnungen ausgebildet werden, welche die perforierte Struktur bereitstellen;
d) optionales Wiederholen des Verfahrensschrittes c) in einem oder mehreren weiteren Bearbeitungsfeld(ern)
wobei das Erzeugen, Ausrichten und Applizieren des einen oder der mehreren gepulsten Laserstrahlen in Schritt c) erfolgt unter Einsatz einer eine Laserbearbeitungsvorrichtung, die umfasst:
eine Laserstrahlungsquelle, die dazu eingerichtet ist, einen Laserstrahl zu erzeugen und entlang eines optisches Pfades in Richtung des Flachprodukts auszusenden; eine der Laserstrahlungsquelle in Strahlrichtung nachgeordnete Strahlteilungseinheit, die dazu eingerichtet ist, den Laserstrahl in eine Vielzahl von Teilstrahlen aufzuteilen, die in einem vorgegebenen räumlichen Pattern verteilt sind; eine der Strahlteilungseinheit in Strahlrichtung nachgeordnete Strahlselektionseinheit, die dazu eingerichtet ist, eine erste Anzahl der Teilstrahlen entlang des optischen Pfades in Richtung des Flachprodukts weiterzuleiten, und dazu eingerichtet ist, eine zweite Anzahl der Teilstrahlen aus dem optischen Pfad abzulenken; sowie eine Scaneinheit, die dazu eingerichtet ist, zu der ersten Anzahl der Teilstrahlen korrespondierende Laserspots auf dem Flachprodukt abzubilden und eine Positionier- und/oder Bearbeitungsbewegung der auf das Flachprodukt projizierten Laserspots innerhalb des Bearbeitungsfeldes auszuführen.

Gleichsam betrifft die Erfindung ein Fertigungssystem zur Fertigung eines mit einer perforierten Struktur versehenen Flachprodukts, mit
a) einem Flachprodukt-Reservoir zur Lagerung des Flachprodukts,
b) einer Flachprodukt-Aufnahmeeinheit, die dazu eingerichtet ist, das Flachprodukt aufzunehmen;
c) einer Flachprodukt-Positioniereinheit zur Anordnung des Flachprodukts in der Flachprodukt-Aufnahmeeinheit,
d) einer Laserbearbeitungsvorrichtung, die dazu eingerichtet ist, einen oder mehrere gepulste Laserstrahlen zu erzeugen und auf eine oder mehrere Bearbeitungsstellen in einem vorgegebenen Bearbeitungsfeld des Flachprodukts auszurichten und zu applizieren, um in dem Flachprodukt an der einen oder den mehreren Bearbeitungsstellen Lochöffnungen auszubilden, welche die perforierte Struktur bereitstellen
wobei das Erzeugen, Ausrichten und Applizieren des einen oder der mehreren gepulsten Laserstrahlen erfolgt unter Einsatz einer Laserbearbeitungsvorrichtung, die umfasst:
eine Laserstrahlungsquelle, die dazu eingerichtet ist, einen Laserstrahl zu erzeugen und entlang eines optisches Pfades in Richtung des Flachprodukts auszusenden; eine der Laserstrahlungsquelle in Strahlrichtung nachgeordnete Strahlteilungseinheit, die dazu eingerichtet ist, den Laserstrahl in eine Vielzahl von Teilstrahlen aufzuteilen, die in einem vorgegebenen räumlichen Pattern verteilt sind; eine der Strahlteilungseinheit in Strahlrichtung nachgeordnete Strahlselektionseinheit, die dazu eingerichtet ist, eine erste Anzahl der Teilstrahlen entlang des optischen Pfades in Richtung des Flachprodukts weiterzuleiten, und dazu eingerichtet ist, eine zweite Anzahl der Teilstrahlen aus dem optischen Pfad abzulenken; sowie eine Scaneinheit, die dazu eingerichtet ist, zu der ersten Anzahl der Teilstrahlen korrespondierende Laserspots auf dem Flachprodukt abzubilden und eine Positionier- und/oder Bearbeitungsbewegung der auf das Flachprodukt projizierten Laserspots innerhalb des Bearbeitungsfeldes auszuführen.

Es sei an dieser Stelle ausdrücklich betont, dass sämtliche der nachfolgend beschriebenen Ausgestaltungen bzw. Varianten der Erfindung sowohl zur Weiterbildung des erfindungsgemäßen Verfahrens als auch des erfindungsgemäßen Fertigungssystems herangezogen werden können. Um unnötige Wiederholungen zu vermeiden seien die erwähnten Ausgestaltungen bzw. Varianten jedoch nur im Zusammenhang des erfindungsgemäßen Verfahrens erörtert.

Das erfindungsgemäße Verfahren bzw. Fertigungssystem kann im Rahmen einer kontinuierlichen Fertigung, d.h. einer andauernden Substratbearbeitung, aber auch in einer halbkontinuierlichen Fertigung, d.h. beispielsweise der Bearbeitung einer vorgegebenen Anzahl von Substraten, oder einer diskontinuierlichen Fertigung, d.h. einer Bearbeitung einzelner Substrate, eingesetzt werden.

Das Flachprodukt-Reservoir kann als Lagervorrichtung für Flachprodukte zu verstehen sein. Das Flachprodukt-Reservoir kann stationär (z.B. in einem Fertigungsraum an einer bestimmten Position positionsfest angeordnet sein) oder bewegbar ausgebildet sein. Ein bewegbares-Reservoir kann z.B. eine auf Rollen, Rädern oder Schienen bewegbare Lagervorrichtung sein. Das Flachprodukt-Reservoir kann im Sinne eines Magazins zur Lagerung einer Mehrzahl von Flachprodukt-Zuschnitten (z.B. in gestapelter Form) zu verstehen sein, jedoch auch im Sinne einer Rollenlagerung zur Lagerung eines aufgerollten Flachprodukts (z.B. in Form einer Folie oder eines Bands). Somit kann das Flachprodukt-Reservoir in Form eines Rollenhalters für aufgerollte Flachprodukte (Coils) ausgebildet sein.

Die Rollen mit aufgerolltem Flachprodukt (Coils), können einem solchen Rollenhalter wechselbar sein. Das Flachprodukt-Reservoir kann Flachprodukte unterschiedlicher Kategorien beinhalten, z.B. in Bezug auf unterschiedliche Materialien, unterschiedliche Schichtdicken oder bestimmte Produkteigenschaften.

Das erfindungsgemäße Verfahren bzw. Fertigungssystem kann auf ein Rolle-zu-Rolle (R2R) Substrat-Fördersystem zurückgreifen, mit welchem ein Substrat (z.B. ein Flachprodukt wie eine Metallfolie) ausgehend von einer Ausgangsrolle (Flachprodukt-Reservoir) in Richtung einer Zielrolle befördert werden kann. Auf dem Transportweg kann eine Bearbeitung (einschließlich der genannten Laserbearbeitung, einer Vorbearbeitung, Nachbearbeitung etc.) erfolgen, es können also unterschiedliche Bearbeitungsstationen zwischengeschaltet sein. Dies ermöglicht eine besonders schnelle und automatisierte Bearbeitung großer Substratmengen, sofern das Substrat formflexibel (und aufrollbar) ist. Vorliegend kann unter dem Terminus des "Substrats" also ein Flachprodukt zu verstehen sein, welches sich auch für eine R2R Beförderung eignet. Eine auf einer R2R Fördertechnik basierende Fertigung ermöglicht ein hohes Maß an Prozessautomatisierung sowie hohe Substratdurchsätze. Rolle-zu-Rolle Technologien ermöglichen des Weiteren die Beförderung von Substraten in hoher Geschwindigkeit und erlauben eine präzise und dynamische Prozesssteuerung. Vereinfacht betrachtet betrifft die R2R Fertigung die Abwicklung eines Substrats von einer Rolle (hier z.B. dem Flachprodukt-Reservoir) in Richtung einer der Laserbearbeitung nachgeschalteten Rolle zum Aufrollen des bearbeiteten Flachprodukts. Nebst einer Ausgangs- und Zielrolle können auch eine oder mehrere Zwischenrollen vorgesehen sein, durch welche das Substrat auf seinem Beförderungsweg eine Richtungsänderung erfahren kann.

Anstelle eines R2R Fördersystems, kann das Flachprodukt auch ein Roll-to-Sheet (R2S) System eingesetzt werden. Dabei wird ein Flachprodukt von einer Rolle abgewickelt und zugeschnitten (der Zuschnitt kann auch durch Stanzen oder dergleichen erfolgen). Der Zuschnitt kann vor oder nach der Laserbearbeitung mit der Laserbearbeitungsvorrichtung erfolgen. Auch können in Folge des Zuschneidens einzelne Zuschnitte des vormaligen Flachprodukt-Bandes gestapelt werden und die Stapel das Flachprodukt-Reservoir ausbilden.

Bei dem erfindungsgemäßen Verfahren bzw. Fertigungssystem kann die Anordnung des bereitgestellten Flachprodukts in einer Flachprodukt-Aufnahmeeinheit über eine Flachprodukt-Positioniereinheit verwirklicht werden. Die Flachprodukt-Positioniereinheit kann beispielsweise unmittelbar von dem R2R Fördersystem als solchem bereitgestellt werden, beispielsweise derart, dass das Substrat über das R2R Fördersystem einen Materialvorschub in Richtung einer Flachprodukt-Aufnahmeeinheit erfährt. Auch kann eine anderweitige Positionierung von Flachprodukten in der Flachprodukt-Aufnahmeeinheit erfolgen. Beispielsweise können einzelne Flachprodukte oder Flachprodukt-Zuschnitte über eine geeignete Roboterzuführung in der Flachprodukt-Aufnahmeeinheit positioniert werden, welche die Flachprodukt-Positioniereinheit bereitstellen können. Dabei können eine oder mehrere Robotereinheiten vorgesehen sein, die das Flachprodukt von dem Flachprodukt-Reservoir in Richtung der Flachprodukt-Aufnahmeeinheit befördern. Der oder die Roboter weisen vorzugsweise bewegliche Arme sowie ein Erfassungsmittel (z.B. ein Greifmittel zum Greifen des Flachprodukts) auf. Das Erfassungsmittel kann mechanisch im Sinne von Greifarmen, magnetisch, elektromagnetisch, oder pneumatisch (Saugnapf) verwirklicht sein. Roboterbasierte Systeme lassen sich flexibel an etwaige Änderungen des Fertigungssystems anpassen und sind in der Regel einfach zu handhaben.

Der Materialvorschub kann ausgehend vom Flachprodukt-Reservoir auch über anderweitige Fördersysteme (welche die Flachprodukt-Positioniereinheit bereitstellen) in Richtung der Flachprodukt-Aufnahmeeinheit erfolgen, z.B. durch eine Rollen- oder Bandförderung. Ferner kann auch ein Rundschalttisch zum Transport des Flachprodukts eingesetzt werden und die Flachprodukt-Positioniereinheit bereitstellen. Auch kann das bearbeitete Flachprodukt nach der Bearbeitung in der Laserbearbeitungsvorrichtung (in welcher die perforierte Struktur ausgebildet wird) über die beschriebenen Fördersysteme entlang einer Fertigungslinie weiterbefördert werden. Dazu wird das bearbeitete Flachprodukt aus der Flachprodukt-Aufnahmeeinheit entnommen oder ausgeschleust.

Die Flachprodukt-Aufnahmeeinheit nimmt das Flachprodukt (oder einen Abschnitt des Flachprodukts) auf und/oder fixiert diesen, sodass eine Laserbearbeitung (insbesondere die Ausbildung der perforierten Struktur) erfolgen kann.

Vorzugsweise ist die Flachprodukt-Aufnahmeeinheit in der Nähe der Laserbearbeitungsvorrichtung angeordnet, sodass ein in der Flachprodukt-Aufnahmeeinheit positioniertes Flachprodukt mittels der Laserbearbeitungsvorrichtung bearbeitet werden kann. Die Flachprodukt-Aufnahmeeinheit kann bewegbar ausgebildet sein (bzw. eine Flachprodukt-Bewegungseinheit aufweisen), beispielsweise im Sinne eines xy-Tischs (dieser ermöglicht eine zweidimensionale Bewegung in einer Ebene) oder eines xyz Tischs (dieser ermöglicht eine dreidimensionale Bewegung, also nebst der zweidimensionalen Bewegung auch eine Bewegung in einer Richtung senkrecht zur genannten Ebene, z-Richtung, beispielsweise in Richtung einer oberhalb oder unterhalb der Flachprodukt-Ebene angeordneten Laserbearbeitungsvorrichtung bzw. einem Laserbearbeitungskopf). Auch kann vorgesehen sein, dass die Flachprodukt-Aufnahmeeinheit lediglich in z-Richtung, also vertikal, bewegbar ist (z.B. im Sinne eines Hubtischs). Die beschriebenen Bewegungen können über eine geeignete Bewegungseinheit verwirklicht werden, die funktional mit der Flachprodukt-Aufnahmeeinheit verbunden ist oder mit dieser eine gemeinsame Baugruppe bildet. Die Bewegungseinheit kann eine oder mehrere Linearachsen umfassen. Bei einer Rollen-basierten Anordnung (R2R, R2S) muss nicht zwingend eine körperliche Flachprodukt-Aufnahmeeinheit im Sinne eines Tischs oder einer Auflageplatte zu verstehen sein. Auch ein räumlicher Bereich, in welchem das Flachprodukt oder ein Ausschnitt des Flachprodukts zur Laserbearbeitung angeordnet wird, kann als Flachprodukt-Aufnahmeeinheit zu verstehen sein. Dieser Bereich kann beispielsweise optisch gekennzeichnet sein (z.B. durch Lichtmarkierungen oder Lasermarkierungen).

Die im Rahmen des erfindungsgemäßen Verfahrens bzw. Fertigungssystems zum Einsatz kommende Laserbearbeitungsvorrichtung ist - wie erwähnt - dazu eingerichtet, einen oder mehrere gepulste Laserstrahlen zu erzeugen und auf eine oder mehrere Bearbeitungsstellen in einem vorgegebenen Bearbeitungsfeld des Flachprodukts auszurichten und zu applizieren, um in dem Flachprodukt an der einen oder den mehreren Bearbeitungsstellen Lochöffnungen auszubilden, welche die perforierte Struktur bereitstellen. Werden mehrere Laserstrahlen auf das Flachprodukt gerichtet, so können diese mehreren Laserstrahlen einer oder mehreren Laserstrahlungsquellen entstammen. Im Falle der Verwendung einer einzigen Laserstrahlungsquelle und der Applikation einer Mehrzahl von Laserstrahlen auf das Flachprodukt, kann die Mehrzahl der Laserstrahlen aus Teilstrahlen eines einer einzigen Laserstrahlungsquelle entstammenden Ausgangslaserstrahls gebildet werden. Alternativ können die mehreren Laserstrahlen mehreren Laserstrahlungsquellen entstammen, die beispielsweise separaten Laserbearbeitungsköpfen zugeordnet sein können.

Die im Rahmen des erfindungsgemäßen Verfahrens bzw. des erfindungsgemäßen Fertigungssystems zum Einsatz kommende Laserbearbeitungsvorrichtung kann unterschiedlich aufgebaut sein und Laserstrahlung auf unterschiedliche Art und Weise in Richtung der einen oder mehreren Bearbeitungsstelle(n) innerhalb des Bearbeitungsfeldes auf dem Flachprodukt ausrichten, positionieren und applizieren. Auch ein Positionswechsel des Bearbeitungsfeldes kann auf unterschiedliche Art und Weise erfolgen. Nachfolgend seien diesbezüglich unterschiedliche Konfigurationen beschrieben, die im Rahmen des erfindungsgemäßen Verfahrens bzw. des Fertigungssystems zum Einsatz kommen können.

Nach einer ersten beispielhaften Variante kann die Laserbearbeitungsvorrichtung eine Laserstrahlungsquelle aufweisen, die dazu eingerichtet ist, einen gepulsten Laserstrahl zu erzeugen und zur Ausbildung jeder einzelnen Lochöffnung eine Mehrzahl von Laserpulsen in Richtung des Flachprodukts auszusenden. Die Laserbearbeitungsvorrichtung kann eine der Laserstrahlungsquelle in Strahlrichtung nachgeordnete Strahlformungseinheit aufweisen, die dazu eingerichtet ist, aus dem Laserstrahl einen modulierten Laserstrahl zu formen.

Beachtlich ist, dass bei dieser Variante eine mit der Flachprodukt-Aufnahmeeinheit zusammenwirkende Flachproduktbewegungseinheit vorgesehen ist, die dazu eingerichtet ist, eine Flachproduktbewegung innerhalb einer von zwei horizontalen Raumachsen aufgespannten Ebene auszuführen.

Der Strahlformungseinheit kann in Strahlrichtung eine Strahlpositionierungseinheit nachgeordnet sein, die dazu eingerichtet ist,
- den modulierten Laserstrahl in Richtung des Flachprodukts auszurichten und einen Laserspot mit einer vorgegebenen Intensitätsverteilung auf dem Flachprodukt abzubilden,
- eine Positionierbewegung zur Positionierung des Laserspots auf die Bearbeitungsstellen auszuführen, bei welcher der Laserspot relativ zu dem Flachprodukt bewegt wird, und
- zumindest während der laserbearbeitenden Ausbildung der einzelnen Lochöffnungen eine zur Flachproduktbewegung synchrone Kompensationsbewegung des Laserspots auszuführen, so dass der Laserspot während der Ausbildung der einzelnen Lochöffnungen keiner Relativbewegung zu dem Flachprodukt unterliegt.

Ferner kann eine Steuereinheit vorgesehen sein, die dazu eingerichtet ist, die von der Flachprodukt-Bewegungseinheit bzw. der Strahlpositionierungseinheit ausgeführte Flachproduktbewegung, Positionierbewegung und Kompensationsbewegung unter Gewährleistung zu steuern.

Die beschriebene Laserbearbeitungsvorrichtung kann auch ohne eine Strahlformungseinheit ausgebildet sein. Ferner kann vorgesehen sein, die Laserbearbeitungsvorrichtung dahingehend auszubilden, dass lediglich eine Bewegung des modulierten (oder nicht modulierten) Laserstrahls ausgeführt wird, bei welcher der modulierte (oder nicht modulierte) Laserstrahl relativ zu dem Flachprodukt bewegt wird, insbesondere zur Ausrichtung auf verschiedene Bearbeitungsstellen. In diesem Fall findet keine Kompensationsbewegung Flachprodukt statt, dieses verbleibt positionsfest. Alternativ kann jedoch auch vorgesehen sein, dass eine Bewegung des Flachprodukts ausgeführt wird, bei welcher das Flachprodukt relativ zu dem modulierten (oder nicht modulierten) Laserstrahl bewegt wird. Im letzteren Fall ist der Laserstrahl positionsfest.

Diese Varianten sind in früheren Deutschen Patentanmeldungen der Anmelderin beschrieben (Anmeldeaktenzeichen: 102019133745.3 und 102019108131.9), deren Offenbarungsgehalt hiermit in die vorliegende Patentanmeldung einbezogen sind.

Wie erwähnt, kann die Laserstrahlungsquelle als Bestandteil der dem erfindungsgemäßen Fertigungssystem zugehörigen Laserbearbeitungsvorrichtung dazu eingerichtet sein, einen Laserstrahl zu erzeugen und zur Bearbeitung des Flachprodukts in Richtung des Flachprodukts auszusenden. Dabei propagiert die dem Laserstrahl zugehörige Laserstrahlung entlang eines optischen Pfades bis zum Auftreffen auf eine Arbeitsebene bzw. auf das zu bearbeitende Flachprodukt. Zwischen der Laserstrahlungsquelle und der Arbeitsebene kann die Laserstrahlung optische Funktionselemente durchlaufen, an diesen reflektiert, gebrochen, geteilt der abgelenkt werden. Unter der erzeugten und ausgesendeten Laserstrahlung kann vorliegend insbesondere gepulste Laserstrahlung zu verstehen sein.

Besonders bevorzugt ist die zumindest eine Laserstrahlungsquelle dazu eingerichtet, einen gepulsten Laserstrahl mit Pulslängen im Femto-, Piko- oder Nanosekundenbereich zu erzeugen. Typische Pulswiederholraten liegen dabei im Bereich zwischen einigen Hertz bis einigen Megahertz. Für eine effektive Materialbearbeitung hat es sich als vorteilhaft erwiesen, wenn die Pulsdauer weniger als 100 ns beträgt, bevorzugt weniger als 10 ns und insbesondere weniger als 1 ns. In diesem Pulsdauerbereich überwiegen bei der Materialbearbeitung thermisch bedingte Effekte.

Wird gepulste Laserstrahlung mit einer kürzeren Pulsdauer eingesetzt, so gewinnen Effekte an Einfluss, die mit der Deposition sehr hoher Energiemengen in sehr kurzer Zeit einhergehen, d.h. mit hohen Peakleistungen. Bei diesen Effekten kann es sich insbesondere um Sublimationseffekte handeln, bei denen das Material des Werkstücks (hier Flachprodukts) schlagartig lokal verdampft, d.h. solche Effekte, bei denen anstelle einer Materialumlagerung ein Materialabtrag erfolgt. Hier hat sich der Einsatz von gepulster Laserstrahlung mit einer Pulsdauer von weniger als 100 ps, insbesondere weniger als 10 ps und besonders bevorzugt weniger als 1 ps als vorteilhaft erwiesen. Insbesondere Pulsdauern im Bereich von einigen Hundert Femtosekunden bis zu etwa 10 ps, lassen einen gezielten Materialabtrag durch Sublimation zu. Die bei zum Anmeldezeitpunkt gebräuchlichen Laserstrahlungsquellen auftretenden Pulswiederholraten liegen dabei typischerweise zwischen 50 und etwa 2.000 kHz.

Zukünftig zur Verfügung stehende Laserstrahlungsquellen mit noch kürzeren Pulsdauern sind ebenfalls im Zusammenhang mit der im Rahmen der Erfindung zum Einsatz kommenden Laserbearbeitungsvorrichtung verwendbar.

Je nach zu lösender Bearbeitungsaufgabe kann aber auch die Verwendung von gepulster Laserstrahlung mit noch längeren Pulsdauern als den vorstehend genannten 100 ns sinnvoll sein, beispielsweise wenn bestimmte Wellenlängen für die Bearbeitungsaufgabe erforderlich sind, oder eine langsamere Energiedeposition vorteilhaft ist.

Wie erwähnt, ist grundsätzlich auch vorstellbar, eine Laserstrahlungsquelle zu verwenden, die kontinuierliche Laserstrahlung erzeugt, d.h. bei der Laserstrahlungsquelle handelt es sich um einen Dauerstrichlaser. Die Laserstrahlungsquelle kann also dazu eingerichtet sein, einen kontinuierlichen continuous-wave Laserstrahl zu erzeugen.

Unabhängig davon, ob die Laserstrahlungsquelle gepulste oder kontinuierliche Laserstrahlung erzeugt, ist die Erfindung nicht auf bestimmte Wellenlängen beschränkt. Vielmehr können Laserstrahlungsquellen eingesetzt werden, die Laserstrahlung erzeugen, deren Wellenlänge im Spektrum zwischen dem tiefen UV und dem fernen Infrarot liegt. Bevorzugt liegt die Wellenlänge der eingesetzten Laserstrahlung im sichtbaren Spektralbereich bis zum nahen Infrarot. Besonders bevorzugt erzeugt die Laserstrahlungsquelle Laserstrahlung mit Wellenlängen von 266 nm, 355 nm, 532 nm oder 1064 nm.

Die die Laserstrahlungsquelle kann dazu eingerichtet sein, monochromatische Laserstrahlung zu erzeugen. Je nach Bearbeitungsaufgabe können aber auch breitbandige Laserstrahlungsquellen vorteilhaft sein.

Weiterhin kann die Laserstrahlungsquelle dazu eingerichtet sein, modenreine Laserstrahlung zu erzeugen (Single Mode Laser), insbesondere Laserstrahlung mit gaußförmiger Intensitätsverteilung. Auch kann die die Laserstrahlungsquelle Laserstrahlung mit rundem Intensitätsprofil erzeugen.

Je nach Anwendungsbereich oder Bearbeitungsaufgabe kann es vorteilhaft sein, zur Laserbearbeitung Laserstrahlung mit einer von einer im Vergleich zu einer gaußförmigen Intensitätsverteilung abweichenden Intensitätsverteilung zu verwenden. Daher werden zunehmend Optimierungen der Laserverfahren durch Änderung der Intensitätsverteilung in der Bearbeitungsebene untersucht. Zur Anpassung der Intensitätsverteilung ist es dabei bekannt, die von einer Laserstrahlungsquelle erzeugte Laserstrahlung einer Strahlformung zu unterziehen, was ein erhebliches Optimierungspotenzial für die Laserprozessentwicklung bietet. Die sich daraus ergebenden Vorteile einer Strahlformung liegen beispielsweise in höheren Prozessgeschwindigkeiten oder in besseren Bearbeitungsergebnissen.

Zur technischen Umsetzung kann die Laserbearbeitungsvorrichtung dazu eine der Laserstrahlungsquelle in Strahlrichtung nachgeordnete Strahlformungseinheit aufweisen, die dazu eingerichtet ist aus dem Laserstrahl einen modulierten Laserstrahl zu formen. Der Begriff der "Strahlrichtung" nimmt in diesem Zusammenhang auf den Verlauf des Laserstrahls Bezug. Die Angabe der in Strahlrichtung in Bezug zur Laserstrahlungsquelle "nachgeordneten" Strahlformungseinheit meint, dass die Strahlformungseinheit entlang des optischen Pfades hinter der Laserstrahlungsquelle angeordnet ist. Der Laserstrahl wird also zunächst erzeugt und tritt erst dann in die Strahlformungseinheit ein bzw. trifft auf dieser auf.

Wie bereits erwähnt, weist die von einer Laserstrahlungsquelle erzeugte Laserstrahlung in Bezug auf ihren Strahlenquerschnitt typischerweise eine gaußförmige Intensitätsverteilung bzw. ein gaußförmiges Strahlprofil auf. Über geeignete Strahlformungstechniken können Laserstrahlen jedoch unter Abänderung der Intensitätsverteilung geformt werden. Zur Formung einer Intensitätsverteilung eines Laserstrahls können entweder seine Phase, seine Amplitude oder beide Größen zusammen moduliert werden. Entsprechend kommen Phasenmodulatoren, Amplitudenmodulatoren oder Phasen- und Amplitudenmodulatoren zum Einsatz, beispielsweise in Form von diffraktiven Strahlformern. Diffraktive Strahlformer (Diffractive Optical Elements, kurz DOE) zur Einstellung von Fernfeldintensitäten können als Phasenelemente in Glas oder anderen transparenten Materialien hergestellt werden. Derartige Strahlformer können die erwähnte Strahlformungseinheit bereitstellen.

Weiterhin kann die Form einer Intensitätsverteilung durch Brechung und Reflektion an optischen Elementen erfolgen. Entsprechend kommen geformte refraktive oder reflektive Elemente wie beispielsweise deformierte oder deformierbare Spiegel oder transmissive Elemente mit einer geometrischen Verformung der Oberfläche oder Form zum Einsatz. Auch derartige Elemente können eine Strahlformungseinheit im Sinne der Erfindung ausbilden. Die einzelnen Teilstrahlen eines auf das refraktive oder reflektive optische Element einfallenden Laserstrahls fallen dabei auf jeweils unterschiedlich gewölbte Oberflächen und werden an diesen reflektiert oder gebrochen. Die Gesamtheit der Teilstrahlen bildet nach der Formung durch das Element eine neue Intensitätsverteilung. Ein Beispiel für ein solche Strahlformung ist die Umformung eines gaußförmigen Laserstrahls in einen Top-Hat förmigen Laserstrahl, auch Gauß-zu-Top-Hat Strahlformer genannt. Die für die Strahlformung notwendige geometrische Verformung der Oberfläche kann mit analytischen, numerischen oder iterativen Verfahren (z.B. Überlagerung von Zernikepolynomen) berechnet werden.

Bekannt sind ferner die sogenannten "programmierbaren" bzw. "variablen" Modulationseinheiten, mit welchen die örtliche und zeitliche Intensitätsverteilung von seitens einer Laserstrahlungsquelle ausgesendeten Laserstrahlung flexibel eingestellt werden kann. Derart programmierbare Modulationseinheiten werden auch als "Spatial Light Modulator (SLM)" bezeichnet, weshalb nachfolgend auf diese Terminologie zurückgegriffen wird. Auch eine solche Einheit bzw. ein SLM kann als Strahlformungseinheit im Sinne der Erfindung betrachtet werden.

Bekannt sind dabei insbesondere Spatial Light Modulatoren auf Basis von Flüssigkristallen (z.B. Liquid Crystal on Silicon (LCoS)-Phasenmodulator Chiparray) oder in Form von "Digital Micromirror Devices". Letztere geben eine ein- oder zweidimensionale Anordnung beweglicher Mikrospiegel an. Die einzeln ansteuerbaren Mikrospiegel erlauben es, gezielt räumliche Bereiche aus dem Querschnitt eines Laserstrahls "auszublenden". Sodann ergibt sich ein Beugungsbild durch Beugung der einfallenden Laserstrahlung an einem "Gitter" in einer Reflexionsanordnung.

Weiterhin sind auch transmittierende variable Spatial Light Modulatoren bekannt, diese werden beispielsweise von der Firma Jenoptik unter der Bezeichnung "Flüssigkristall-Lichtmodulatoren Spatial Light Modulator-S" vertrieben.

Die genannten Arten von variablen Spatial Light Modulatoren erlauben die Erzeugung von in weiten Grenzen frei vorgebbaren Intensitätsverteilungen in der Arbeitsebene bzw. auf dem Flachprodukt durch Beugung von Laserstrahlung. Vom Umfang der Erfindung ist daher die Verwendung jeglicher der genannten Arten von variablen Spatial Light Modulatoren als Strahlformungseinheit in einer Laserbearbeitungsvorrichtung umfasst. Es stellt einen besonderen Vorteil der Verwendung eines variablen Spatial Light Modulators dar, dass mittels eines einzigen variablen Spatial Light Modulators eine Vielzahl verschiedener Intensitätsverteilungen auf dem Werkstück erzeugt werden können.

Zusammenfassend kann festgestellt werden, dass mit einem Spatial Light Modulator (gleich welcher Natur) örtliche Phasenänderungen durch Änderung der optischen Weglänge oder von Brechungsindices bewirkt werden können. Bei Kenntnis der Eigenschaften des Eingangsstrahls kann mit ihnen eine gewünschte Form einer Wellenfront eines Laserstrahls über die Einblendung einer geeigneten Phasenverteilung eingestellt werden. Auch kann mit einem solchen SLM in einer Arbeitsebene, also auf einem zu bearbeitenden Flachprodukt, eine gewünschte Intensitätsverteilung des Laserstrahls und damit eine gewünschte Strahlform eingestellt werden.

Die vorstehend genannten Möglichkeiten zur Anpassung der Strahlform können in einer in dem erfindungsgemäßen Verfahren bzw. Fertigungssystem eingesetzten Laserbearbeitungsvorrichtung, insbesondere in einer Strahlformungseinheit, Verwendung finden, bzw. die Laserbearbeitungsvorrichtung kann die dazu notwendigen Komponenten umfassen.

Wie schon erwähnt, kann die Laserbearbeitungsvorrichtung eine der Strahlformungseinheit in Strahlrichtung nachgeordnete Strahlpositionierungseinheit umfassen. Diese kann dazu eingerichtet sein, eine Bewegung des modulierten (oder nicht modulierten) Laserstrahls auszuführen, bei welcher der Laserstrahl relativ zu dem Flachprodukt bewegt wird, insbesondere zur Ausrichtung auf verschiedene Bearbeitungsstellen. Die Strahlpositionierungseinheit kann beispielsweise zumindest einen Galvanometerscanner umfassen, gegebenenfalls zusätzlich einen Fokusshifter. Mit dem Fokusshifter kann der Fokus des modulierten Laserstrahl in Bezug auf eine z-Raumrichtung relativ zum Werkstück eingestellt werden. Ein Galvanometerscanner (von diesem können auch mehrere in Reihe oder parallel geschaltet werden) kann einen oder mehrere Spiegel aufweisen, die jeweils um eine Drehachse um einen definierten Winkel gedreht werden können. Dadurch kann der von den Spiegeln reflektierte Laserstrahl als Laserspot innerhalb des zugänglichen Bearbeitungsfeldes (Scanfeld) auf eine gewünschte Stelle des Flachprodukt gelenkt werden. Im Speziellen kann ein Galvanometerscanner auch als zweiachsiger galvanometrischer Spiegelscanner beschrieben werden. Mittels eines solchen Spiegelscanners kann der modulierte Laserstrahl entlang zweier voneinander unabhängiger Achsen x und y, die in der Ebene der Oberfläche des zu bearbeitenden Flachprodukts liegen, bewegt werden. In einer weiteren Variante kann zudem vorgesehen sein, eine Mehrzahl von Galvanometerscannern zur Ausbildung der Strahlpositionierungseinheit oder eines Teils davon vorzusehen. Die Galvanometerscanner können beispielsweise im Sinne einer Reihen- oder Parallelschaltung oder eine Kombination daraus angeordnet werden.

Nach einer weiteren vorteilhaften Ausgestaltung der Erfindung kann die Flachprodukt-Bewegungseinheit eine ein- oder mehrdimensionale Lineareinheit, eine drehbare Achseinheit, einen Hubtisch oder eine Kombination der vorgenannten Komponenten umfassen.

Wie erwähnt, kann das Flachprodukt während der Bearbeitung positionsfest angeordnet sein (die Bearbeitungsstellen werden in diesem Fall lediglich durch die Bewegung des Laserstrahls oder der Laserbearbeitungsvorrichtung eingestellt), oder ebenfalls einer Bewegung (relativ zu dem Flachprodukt) unterzogen werden. In letzterem Fall kann vorgesehen sein, den Laserstrahl statisch, d.h. positionsfest, auszurichten und lediglich eine Bewegung des Flachprodukts auszuführen, bei welcher dieses relativ zu dem (statischen) Laserstrahl bewegt wird. Auch über eine solche Relativbewegung können unterschiedliche Bearbeitungsstellen des Flachprodukts bearbeitet werden. Auch kann vorgesehen sein, nebst der Bewegung des Laserstrahls relativ zum Flachprodukt eine Bewegung des Werkstücks auszuführen, bei welcher dieses relativ zu dem Laserstrahl bewegt wird. Es kann also eine gleichzeitige (simultane) oder überlagerte Bewegung sowohl des Laserstrahls als auch des Flachprodukts erfolgen. Die Bewegung kann mit unterschiedlichen Bewegungsgeschwindigkeiten ausgeführt werden. Auch kann vorgesehen sein, sequenziell lediglich das Flachprodukt relativ zu einem positionsfesten Laserstrahl bzw. den Laserstrahl relativ zu einem positionsfesten Flachprodukt zu bewegen. Die Ausbildung bzw. Ansteuerung der Flachprodukt-Bewegungseinheit (diese wirkt mit der Flachprodukt-Aufnahmeeinheit zusammen) kann je nach Bearbeitungsaufgabe oder je nach auszubildender perforierter Struktur variieren. Die Bewegungssteuerung kann in Bezug auf eine hohe Bearbeitungsgeschwindigkeit optimiert werden, insbesondere unter Berechnung optimierter Bewegungspfade des Flachprodukts und/oder des Laserstrahls.

Zur Bereitstellung einer Relativbewegung des Flachprodukts zu einem Laserstrahl (unabhängig davon, ob dieser statisch positioniert ist oder ebenfalls bewegt wird) kann die Bewegungseinheit dazu eingerichtet sein, eine Bewegung des Flachprodukts innerhalb einer von zwei horizontalen Raumachsen aufgespannten Ebene auszuführen. Bei der Bewegung kann eine eindimensionale Linearbewegung in der Ebene wie auch eine zweidimensionale Bewegung in der Ebene (beispielsweise im Sinne einer Kurvenfahrt) ausgeführt werden. Die Bewegung des Flachprodukts (entlang eines vorgegebenen Bewegungspfades) kann kontinuierlich (d.h. ohne Stillstand) ausgeführt werden. Auch Stillstandsituationen der Bewegung des Flachprodukts (wie auch bei der Bewegung des modulierten Laserstrahls) sind grundsätzlich möglich. Entsprechend kann die Flachprodukt-Bewegungseinheit, wie erwähnt, eine ein- oder mehrdimensionale Lineareinheit, eine drehbare Achseinheit, einen Hubtisch oder eine Kombination der vorgenannten Komponenten umfassen.

Als zur Bewegung des Flachprodukts ausgebildete Flachprodukt-Bewegungseinheit kommt beispielsweise eine zwei- oder mehrachsige Lineareinheit in Betracht, die über geeignete Linearantriebe eine Bewegung der Flachprodukt-Aufnahmeeinheit, eines Flachprodukts als solchem oder einer Flachprodukt-Aufnahmeeinheit samt darin angeordnetem Flachprodukt ausführen kann. Lineareinheiten können synonym auch als Linearachsen bezeichnet werden.

Üblicherweise weist eine Linearachse eine Führungsschiene, ein entlang der Führungsschiene verfahrbares Fahrglied (beispielsweise einen Transportschlitten, der als Flachprodukt-Aufnahmeeinheit ausgebildet sein kann) und eine Antriebsvorrichtung zum wahlweisen Bewegen und Positionieren des Fahrgliedes längs zur Führungsschiene auf. Nachfolgend sei das verfahrbare Fahrglied als Flachprodukt-Aufnahmeeinheit bezeichnet. Zum Positionieren der verfahrbaren Flachprodukt-Aufnahmeeinheit an eine vorgegebene Stelle, ist es erforderlich, dass die Antriebsvorrichtung die Flachprodukt-Aufnahmeeinheit längs zur Führungsschiene sowohl beschleunigen als auch verzögern (d.h. bremsen) kann. Eine im Rahmen der hiesigen Erfindung zum Einsatz kommende Antriebsvorrichtung kann also sowohl zum Beschleunigen, als auch zum Bremsen der verfahrbaren Flachprodukt-Aufnahmeeinheit in einer geradlinigen Bewegung längs zur Führungsschiene ausgebildet sein. In der Regel ist eine solche Antriebsvorrichtung dazu eingerichtet, die Flachprodukt-Aufnahmeeinheit gleichförmig (d.h. mit konstanter Geschwindigkeit) oder mit alternierender Geschwindigkeit längs zur Führungsschiene zu bewegen. Bei der Antriebsvorrichtung kann es sich um einen mechanischen, elektrischen, pneumatischen oder hydraulischen Antrieb handeln. Bei Laserbearbeitungsvorrichtungen wird in der Regel auf elektrische Antriebe zurückgegriffen. Im Sinne der vorliegenden Erfindung kann unter der Flachprodukt-Bewegungseinheit insbesondere eine Anordnung einer oder mehrerer Linearachsen samt Antriebsvorrichtung(en) zu verstehen sein.

Die Flachprodukt-Aufnahmeeinheit kann über eine geeignete Lagerung mit der zur Bewegung des Flachprodukts ausgebildeten Bewegungseinheit (bzw. eines Teils davon) verbunden sein. Bei Verwendung zweier Linearachsen, können diese in einer Horizontalebene senkrecht zueinander angeordnet sein. Auch können zusätzliche, in Bezug auf die vorgenannten Achsen gewinkelt angeordnete Linearachsen, beispielsweise Diagonal-Achsen, vorgesehen sein. Die Flachprodukt-Aufnahmeeinheit kann - wie bereits erwähnt - als Fahrglied ausgebildet sein, beispielsweise als Transportschlitten.

Überdies kann die zur Bewegung des Flachprodukts ausgebildete Bewegungseinheit (oder ein Teil davon) dahingehend ausgestaltet sein, das Flachprodukt bzw. die Flachprodukt-Aufnahmeeinheit (samt Flachprodukt) entlang nur einer Raumachse in einer Horizontalebene zu bewegen, oder aber entlang zweier innerhalb der Horizontalebene senkrecht zueinanderstehenden Raumachsen. Auch die eingangs erwähnten Ausgestaltungsvarianten des Transportbands, der rollengebundenen Transporteinrichtung oder der Fördereinrichtung als Bestandteile des Transfersystems, können die Bewegungseinheit ausbilden.

Ferner kann die zur Bewegung des Flachprodukts ausgebildete Bewegungseinheit (oder ein Teil davon) dazu ausgebildet sein, eine flexible Positionierung des Flachprodukts innerhalb der Horizontalebene zu ermöglichen. Denkbar ist zum Beispiel, die zur Bewegung des Flachprodukts ausgebildete Bewegungseinheit (oder einen Teil davon) als robotergesteuerten Positionierarm auszubilden, der die Flachprodukt-Aufnahmeeinheit oder das Flachprodukt innerhalb der genannten Horizontalebene flexibel positionieren kann. Auch kann vorgesehen sein, dass ein solcher Roboterarm dazu eingerichtet ist, die Flachprodukt-Aufnahmeeinheit samt aufgenommenem Flachprodukt in Bezug auf eine Vertikalachse zu positionieren. Alternativ kann vorgesehen sein, die Bewegungseinheit mit im Sinne eines Hubtischs auszubilden, was ebenfalls eine Vertikalbewegung des Flachprodukts oder eines in einer Flachprodukt-Aufnahmeeinheit angeordneten Flachprodukts ermöglichen kann.

Weiterhin kann eine Laserbearbeitungsvorrichtung vorgesehen sein, die auf einer Multistrahlbearbeitung beruht. Eine solche Vorrichtung wurde bereits in einer früheren Deutschen Patentanmeldung der Anmelderin beschrieben (Aktenzeichen: 10 2019 114 191.5), deren Offenbarungsgehalt hiermit in die vorliegende Patentanmeldung einbezogen ist.

Eine solche Laserbearbeitungsvorrichtung umfasst eine Laserstrahlungsquelle, die dazu eingerichtet ist, einen Laserstrahl zu erzeugen und entlang eines optischen Pfades in Richtung des Flachprodukts auszusenden. Weiterhin umfasst die Laserbearbeitungsvorrichtung eine der Laserstrahlungsquelle in Strahlrichtung nachgeordnete Strahlteilungseinheit, die dazu eingerichtet ist, den Laserstrahl in eine Vielzahl von Teilstrahlen aufzuteilen, die in einem vorgegebenen räumlichen Pattern verteilt sind. Weiterhin kann die Laserbearbeitungsvorrichtung eine der Strahlteilungseinheit in Strahlrichtung nachgeordnete Strahlselektionseinheit umfassen, die dazu eingerichtet ist,
- eine erste Anzahl der Teilstrahlen entlang des optischen Pfades in Richtung des Werkstücks weiterzuleiten, und
- eine zweite Anzahl der Teilstrahlen aus dem optischen Pfad abzulenken,
Die Strahlselektionseinheit ist ferner dazu eingerichtet, aus dem räumlichen Pattern der Teilstrahlen in beliebiger räumlicher Kombination Teilstrahlen zu selektieren und der ersten Anzahl und der zweiten Anzahl zuzuordnen.

Ferner kann die Laserbearbeitungsvorrichtung eine der Strahlselektionseinheit in Strahlrichtung nachgeordnete Strahlpositionierungseinheit umfassen, die dazu eingerichtet ist, zu der ersten Anzahl der Teilstrahlen korrespondierende Laserspots auf dem Flachprodukt abzubilden, und ferner dazu eingerichtet ist, die Laserspots gegebenenfalls zur Positionierung und/oder zur Bearbeitung simultan und synchron über das Flachprodukt zu bewegen.

Mit einer derartigen Multistrahlbearbeitung ist eine simultane, d.h. parallele und zeitgleiche, Bearbeitung einer Mehrzahl von Bearbeitungsstellen auf einem Flachprodukt eröffnet. Dadurch lässt sich die Bearbeitungsgeschwindigkeit inhärent erhöhen. Insbesondere bei der Ausbildung perforierter Strukturen, die sich aus einer Vielzahl von Lochöffnungen zusammensetzen, kann eine derartige Laserbearbeitungsvorrichtung zur Erhöhung der Fertigungsgeschwindigkeit beitragen.

Auch die beschriebene auf einer Multistrahlbearbeitung basierende Laserbearbeitungsvorrichtung umfasst eine Laserstrahlungsquelle, die dazu eingerichtet ist, einen Laserstrahl zu erzeugen und entlang eines optischen Pfades in Richtung des Flachprodukts auszusenden. Zwischen der Laserstrahlungsquelle und dem Flachprodukt kann der ausgesendete Laserstrahl optische Funktionselemente durchlaufen, an diesen reflektiert, gebrochen, geteilt der abgelenkt werden. Unter dem erzeugten und ausgesendeten Laserstrahl kann vorliegend ein kontinuierlicher Laserstrahl, insbesondere aber ein Laserpuls zu verstehen sein.

Die auf der Multistrahlbearbeitung basierende Laserbearbeitungsvorrichtung umfasst ferner eine der Laserstrahlungsquelle in Strahlrichtung nachgeordnete Strahlteilungseinheit. Diese ist dazu eingerichtet, den Laserstrahl in eine Vielzahl von Teilstrahlen aufzuteilen, die in einem vorgegebenen räumlichen Pattern verteilt sind. Zudem kann zwischen der Laserstrahlungsquelle und der Strahlteilungseinheit ein Strahlformungselement vorgesehen sein, mit welchem aus einem Laserstrahl mit gaußförmiger Intensitätsverteilung, in Kombination mit der Strahlteilungseinheit auf dem zu bearbeitenden Flachprodukt eine Vielzahl von parallelen Teilstrahlen mit einer vorgegebenen Intensitätsverteilung erzeugt werden kann, beispielsweise einer Top-Hat Intensitätsverteilung oder einer ringförmigen Intensitätsverteilung.

Der Begriff der "Strahlrichtung" nimmt in diesem Zusammenhang auf den Verlauf des Laserstrahls Bezug. Die Angabe der in Strahlrichtung in Bezug zur Laserstrahlungsquelle "nachgeordneten" Strahlteilungseinheit meint, dass die Strahlteilungseinheit entlang des optischen Pfades hinter der Laserstrahlungsquelle angeordnet ist. Der Laserstrahl wird also zunächst erzeugt und tritt erst dann in die Strahlteilungseinheit ein bzw. trifft auf diese auf.

Bei der Strahlteilungseinheit kann es sich beispielsweise um ein diffraktives optisches Element (DOE) handeln. Denn neben dem vorangehend beschriebenen Einsatz derartiger Elemente zur Strahlformung, können DOEs auch als Strahlteiler ausgebildet sein. Beispielhaft seien in diesem Zusammenhang binäre Gitter oder Blazed Gratings genannt. Aufgrund der Geometrie der diffraktiven Struktur kommt es auf einem rechteckigen Gitter im Ortsfrequenzraum (k-Raum) zu konstruktiver Interferenz. Durch numerische Algorithmen können unterschiedlichste Anordnungen von aktiven Beugungsordnungen (konstruktive Interferenz) verwirklicht werden. Hierbei muss die Winkeltrennung der Beugungsordnungen groß genug gegenüber der Fernfelddivergenz der einfallenden Laserstrahlung sein, da andernfalls Interferenz die Anordnung der aktiven Beugungsordnungen stört.

Solche unveränderbaren DOEs werden jedoch zunehmend durch programmierbare Modulationseinheiten zur dynamischen Formung der Laserstrahlung ersetzt. Mit programmierbaren Modulationseinheiten kann die örtliche und zeitliche Intensitätsverteilung von seitens einer Laserstrahlungsquelle ausgesendeten Laserstrahlung eingestellt werden. Derart programmierbare Modulationseinheiten werden auch als "Spatial Light Modulator (SLM)" bezeichnet. Auch Spatial Light Modulatoren können grundsätzlich zur Strahlteilung eingesetzt werden.

Wie schon erwähnt, umfasst die zur Multistrahlbearbeitung ausgebildete Laserbearbeitungsvorrichtung eine Strahlselektionseinheit. Mit dieser kann eine erste Anzahl der Teilstrahlen entlang des optischen Pfades in Richtung des Flachprodukts weitergeleitet bzw. abgelenkt werden. Ferner kann eine zweite Anzahl der Teilstrahlen aus dem optischen Pfad abgelenkt werden, was bedeutet, dass die zweite Anzahl der Teilstrahlen nicht auf das Flachprodukt auftreffen. Die Menge jener der ersten und zweiten Anzahl (d.h. der in Richtung des Flachprodukts abgeleiteten Teilstrahlen und der aus dem optischen Pfad weggeleiteten Teilstrahlen) hängt von der Anzahl der Bearbeitungsstellen innerhalb des Bearbeitungsbereichs ab, der in einem bestimmten Bearbeitungsschritt im Bereich des Scanfelds liegt. Ist es aufgrund der Strahlteilungseinheit beispielsweise grundsätzlich möglich den Laserstrahl in einen 16 mal 16 Teilstrahlarray aufzuteilen und auf ein Flachprodukt auszurichten, und sind jedoch nur vier Bearbeitungsstellen im für das Scanfeld zugänglichen Bereich des Flachprodukts vorhanden, so müssen lediglich vier Teilstrahlen zur Ausbildung von Lochöffnungen bereitgestellt werden. Die überschüssigen Teilstrahlen können sodann mit der Strahlselektionseinheit aus dem optischen Pfad abgelenkt werden.

Wie schon erwähnt, ist ein weiterer Bestandteil der zur Multistrahlbearbeitung ausgebildeten Laserbearbeitungsvorrichtung eine der Strahlselektionseinheit in Strahlrichtung nachgeordnete Strahlpositionierungseinheit, die dazu eingerichtet ist, zu der ersten Anzahl der Teilstrahlen korrespondierende Laserspots auf dem Flachprodukt abzubilden. Weiterhin ist die Strahlpositionierungseinheit dazu eingerichtet, die Laserspots zur Positionierung und zur Bearbeitung simultan und synchron über das Flachprodukt zu bewegen. Dabei kann die Positionierung der Bearbeitung vorgelagert sein. Beide Schritte können nach der Positionierung des Flachprodukts relativ zu der Laserbearbeitungsvorrichtung für die einzelnen Bearbeitungsschritte wiederholt werden. Es ist jedoch ohne weiteres möglich, ein Flachprodukt an einer vorgegebenen Anzahl von Bearbeitungsstellen ohne die Ausführung einer Bearbeitungsbewegung zu bearbeiten, z. B. im Point-and-Shoot Modus.

Bei der Strahlpositionierungseinheit kann es sich beispielsweise um einen Galvanometerscanner handeln. Ein solcher Scanner kann einen oder mehrere Spiegel aufweisen, die jeweils um eine Drehachse um einen definierten Winkel gedreht werden können. Dadurch kann der von den Spiegeln reflektierte Laserstrahl als Laserspot innerhalb des zugänglichen Scanfeldes auf eine gewünschte Bearbeitungsstelle des Flachprodukts gelenkt werden.

Erwähnt sei auch die grundsätzliche Möglichkeit bei der Laserbearbeitung auf ein DLIP (Direct Laser Interference Patterning) Prozedere zurückzugreifen.

Weitere vorteilhafte Ausgestaltungen der vorliegenden Erfindung sind in den Unteransprüchen sowie der nachfolgenden Beschreibung der in den Unteransprüchen genannten Merkmale sowie weiterer Merkmale angegeben.

Nach einer ersten Ausgestaltung der Erfindung kann (sowohl beim erfindungsgemäßen Verfahren als auch beim erfindungsgemäßen Fertigungssystem) eine Flachprodukt-Aufnahmeeinheit verwendet werden, die eine Fixiereinrichtung aufweist, mit welcher das Flachprodukt bei dessen Anordnung in der Flachprodukt-Aufnahmeeinheit fixierbar ist, wobei die Fixiereinrichtung insbesondere eine Vakuum-Spannplatte, eine Magnet-Spannplatte oder eine Elektro-Spannplatte ist. Mit der Fixiereinrichtung kann das Flachprodukt positionsfest gehalten werden. Auf der Vakuum-Spannplatte, der Magnet-Spannplatte oder der Elektro-Spannplatte können Anschlagelemente vorgesehen sein, an welche das Flachprodukt bei dessen Anordnung auf der Platte anschlagen kann. Dadurch kann die Anordnung (oder Zentrierung) vereinfacht und verbessert werden. Die Anschläge können lösbar oder verschiebbar ausgebildet sein, um beispielsweise eine Anpassung an unterschiedliche Geometrien oder Größen des Flachprodukts zu gewährleisten. Handelt es sich um eine R2R Fertigung, können die verwendeten Rollen zur Bearbeitung kurzzeitig gestoppt werden. Sodann kann ein Ausschnitt des Flachprodukts (vorliegend z.B. als Band) in der Flachprodukt-Aufnahmeeinheit (z.B. auf einer der o.g. Platten oder einer anderweitigen Fixiereinrichtung) positioniert werden, ohne den Ausschnitt dabei vom restlichen Band zu trennen. Nach abgeschlossener Bearbeitung können die Rollen wieder angefahren werden, um das Band weiterzubefördern und ggf. den nächsten zu bearbeitenden Bandausschnitt in der Flachprodukt-Aufnahmeeinheit anzuordnen. Selbstverständlich kann die Flachprodukt-Aufnahmeeinheit auch zur Aufnahme einzelner Flachprodukte (z.B. Zuschnitte) ausgebildet sein. Eine Vakuum-Spannplatte saugt ein darauf positioniertes Flachprodukt von einer Seite an und hält dieses dadurch in Position. Insbesondere plane Objekte lassen sich dadurch zuverlässig positionsfest anordnen. Eine Magnet-Spannplatte kann beispielsweise eine auf Permanentmagneten basierende Spannplatte sein, die metallische Produkte durch magnetische Anziehung fixieren kann. Dazu muss das Flachprodukt jedoch magnetisch bzw. von einem Magneten anziehbar sein. Alternativ könnte auch eine magnetische Maske oberhalb des Flachprodukts angeordnet werden, durch deren Öffnungen (bzw. Aperturen) die Laserbearbeitung durchgeführt wird. Auch kann eine solche Spannplatte Elektromagnete umfassen.

Nach einer weiteren Ausgestaltung der Erfindung kann das Flachprodukt eine Metallfolie sein, die mittels einer Flachprodukt-Positioniereinheit stückweise, beispielsweise in Form von Metallfolien-Zuschnitten, oder kontinuierlich als Metallfolien-Band der Flachprodukt-Aufnahmeeinheit zugeführt wird. Die Metallfolie kann aus reinen Metallen oder Metalllegierungen gebildet sein. Die Metallfolie kann ein- oder mehrlagig ausgebildet sein. Die Metallfolie kann Beschichtungen aufweisen oder im Wege des Verfahrens beschichtet werden. Beispielsweise kann die Metallfolie aus Edelstahl, Aluminium, Kupfer, Titan oder anderen Metallen gefertigt sein. Grundsätzlich kann das Flachprodukt auch eine aus einem anderen Material gefertigte Folie oder ein Dünnschichtsubstrat sein, beispielsweise aus Kunststoff oder Keramik. Sofern Zuschnitte des Flachprodukts verwendet werden (seien dies Zuschnitte einer Folie aus Metall oder einem anderen Material), so können diese vor Bereitstellung in dem Flachprodukt-Reservoir (dieses kann z.B. ein Magazin sein) zugeschnitten werden. Bei einer R2S Fertigung, können die Zuschnitte vor der Laserbearbeitung aus einem auf einer Ausgangsrolle gelagerten Band geschnitten und der Flachprodukt-Aufnahmeeinheit zugeführt werden. Metallfolien zeichnen sich durch eine hohe Stabilität bei gleichzeitiger Flexibilität aus. Insbesondere bei Applikationen als Mikrofilter oder Mikrosieben ermöglichen Metallfolien eine hohe (mechanische und chemische) Lebensdauer. Die Ausbildung einer perforierten Struktur zur Bereitstellung der Filter- oder Siebwirkung mittels Laserbearbeitung eröffnet die Bereitstellung definierter Geometrien die perforierte Struktur bereitstellenden Lochöffnungen, beispielsweise in Form definierter Austritts-Geometrien. Ferner können definierte Lochabstände zwischen den Lochöffnung und hohe Dichten von Lochöffnungen gewährleistet werden. Mit "Dichte" ist hier eine Anzahl pro Fläche des Flachprodukts gemeint. Die Metallfolie kann eine Materialstärke von 5 µm bis 100 µm aufweisen, ist aber nicht auf diesen Bereich limitiert.

Nach einer weiteren Ausgestaltung der Erfindung kann das Flachprodukt-Reservoir ein Lager für eine Mehrzahl der Metallfolien-Zuschnitte oder eine Rolle zur Lagerung des aufgerollten Metallfolien-Bandes bereitstellen. Metallfolien-Zuschnitte können beispielsweise stapelweise gelagert werden. Zwischen den Zuschnitten können optionale Abstandshalter (Spacer) angeordnet sein. Bei einer Lagerung eines Metallfolien-Bandes auf einer Rolle ist das Metallfolien-Band auf einen Rollenkörper aufgerollt (aufgewickelt). Mit einer Rollenlagerung können große Längen von Metallfolien raumsparend gelagert und vor Ort genutzt (z.B. abgerollt werden). Der Rollenkörper (Wickelkörper) kann eine geeignete Transporteinrichtung aufweisen, mit welcher er (z.B. innerhalb einer Fertigungshalle) bewegt werden kann. Auch kann eine externe Transportvorrichtung vorgesehen sein, mit welcher der Rollenkörper von einer Stelle zur nächsten befördert werden kann. Das Flachprodukt-Reservoir kann auch eine Mehrzahl von unterschiedlichen Flachprodukten umfassen, beispielsweise betreffend unterschiedliche Materialien, Größen, Schichtdicken etc. Bei der Verwendung von Zuschnitten, können beispielsweise Zuschnitte unterschiedlicher Größe auf unterschiedlichen Stapeln bereitgestellt werden, wobei die Stapel gemeinsam das Flachprodukt-Reservoir ausbilden. Gleiches gilt für die Verwendung mehrerer Rollen mit darauf aufgerolltem Flachprodukt. Das Flachprodukt-Reservoir kann also im Sinne eines Materiallagers oder Magazins unterschiedliche Teil-Reservoirs aufweisen. Diese Teil-Reservoirs können zudem nach unterschiedlichen Bearbeitungsaufgaben aufgeteilt sein (die auszubildenden perforierten Strukturen weisen unterschiedliche Dichten von Lochöffnungen, Durchmesser von Lochöffnungen etc. auf).

Nach einer weiteren Ausgestaltung der Erfindung kann vor oder nach der Laserbearbeitung eine Anzahl von Metallfolien-Ausschnitten in den Metallfolien-Zuschnitten oder dem Metallfolien-Band sollbruchmarkiert werden, wobei das Sollbruchmarkieren einen Ätzprozess, einen Stanzprozess, einen Schneidprozess oder einen Prägeprozess umfasst. Das "Sollbruchmarkieren" bildet dabei eine Sollbruchmarkierung aus, die ein vereinfachtes Lösen der Metallfolien-Ausschnitte aus dem Metallfolien-Band ermöglicht. Das Sollbruchmarkieren kann durch einen Ätzprozess, Stanzprozess, Schneidprozess oder einen Prägeprozess ausgeführt werden, wodurch ein jeweiliger Metallfolien-Ausschnitt z.B. derart vom umgebenden Material des Metallfolien-Zuschnitts oder Metallfolien-Bands vorgelöst wird, dass der Metallfolien-Ausschnitt nur noch durch an eine Anzahl (z.B. drei oder vier) von Materialstegen mit dem Metallfolien-Zuschnitt oder dem Metallfolien-Band verbunden ist. Das überschüssige Material (bis auf die Materialstege) wird also durch den Ätzprozess, Stanzprozess, Schneidprozess oder Prägeprozess entfernt. Dazu können eigene Vorrichtungen vorgesehen sein, die der Laserbearbeitungsvorrichtung in einer von dem Fertigungssystem ausgebildeten Fertigungslinie vor- oder nachgelagert sind. Werden Metallfolien-Ausschnitte vor der Laserbearbeitung sollbruchmarkiert, so kann die Laserbearbeitung unmittelbar auf den einzelnen Metallfolien-Ausschnitten vorgenommen werden. Die einzelnen Metallfolien-Ausschnitte können im Anschluss von der Metallfolie getrennt werden und separate Bauteile bereitstellen. Auch kann vorgesehen sein, an bestimmten Bearbeitungsfeldern der Metallfolie eine perforierte Struktur auszubilden und die Sollbruchmarkierung im Nachgang an die Laserbearbeitung auszubilden, beispielsweise derart, dass jeweils bereits ausgebildete perforierte Strukturen innerhalb eines sollbruchmarkierten Metallfolien-Ausschnitts liegen. Es ist vorstellbar, eine sollbruchmarkierte und laserbearbeitete Metallfolie auf einer Rolle aufzuwickeln. Sollbruchmarkierte Metallfolien-Ausschnitte bzw. Flachprodukte können zudem Positions- oder Positioniermerkmale wie Pass(er)marken oder Filmlöcher aufweisen, an denen optisch oder mechanisch referenziert bzw. positioniert bzw. das Flachprodukt (die Metallfolie) gar vorgezogen wird.

Nach einer weiteren Ausgestaltung der Erfindung können die markierten Metallfolien-Ausschnitte eine kreisförmige Kontur mit einem Durchmesser von 5 mm - 20 mm, insbesondere 10 mm aufweisen. Es sei betont, dass die Metallfolien-Ausschnitte auch anderweitige Konturen (z.B. polygonale, ovale, elliptische etc.) aufweisen können (je nach Kundenwunsch und Applikation). Gleiches gilt für Durchmesser oder Größenabmessungen der Metallfolien-Ausschnitte, die ebenfalls vom Kundenwunsch oder der jeweiligen Applikation abhängen können.

Nach einer weiteren Ausgestaltung der Erfindung kann das Flachprodukt zusätzlich zur Ausbildung der perforierten Struktur im Wege einer Laserbearbeitung oder anderweitig entschichtet, gebohrt, funktionalisiert, geschnitten, beschriftet und/oder markiert werden. Diese Vorgänge können vor der Laserbearbeitung (also der Ausbildung der perforierten Struktur) oder nach erfolgter Laserbearbeitung (also der Ausbildung der perforierten Struktur) erfolgen. Es sei betont, dass auch diese zusätzlichen Schritte des Entschichtens, Bohrens, Funktionalisierens, Schneidens, Beschriftens und/oder Markierens mittels einer Laserbearbeitungsvorrichtung vorgenommen werden können. Dazu kann eine zusätzliche Laserbearbeitungsvorrichtung eingesetzt werden, jedoch auch die ohnehin im Verfahren bzw. Fertigungssystem zur Ausbildung der perforierten Struktur eingesetzte Laserbearbeitungsvorrichtung. Selbstverständlich kann dazu im letzteren Fall ein Wechsel des Bearbeitungs-Set-Up (z.B. eine Anpassung von Bearbeitungsparametern oder Hardwarekomponenten) erforderlich sein. Gleichsam können die Schritte des Entschichtens, Bohrens, Funktionalisierens, Schneidens, Beschriftens und/oder Markierens auf anderem Wege (z.B. mechanisch) erfolgen. Unter einer Funktionalisierung kann insbesondere die Einbringung von Strukturen in oder auf die Metallfolie (bzw. die daraus hervorgehenden Bauteile) verstanden werden. Eine solche Funktionalisierung kann eine Oberflächenfunktionalisierung der Metallfolie betreffen. Dies kann definierte Oberflächenrauigkeiten, eine Nanostrukturierung, Keilspalte, Näpfchenstrukturen, oder anderweitige morphologische bzw. topographische Strukturen ausgebildet werden. Diese Strukturen können zusätzlich zur perforierten Struktur vorgesehen sein und je nach gewünschter Applikation variieren. Eine nanostrukturierende Oberflächenfunktionalisierung kann beispielsweise mittels einer Laserinterferenzstrukturierung durchgeführt werden. Damit können Nanostrukturen mit hoher Flächenrate in die Metallfolie (aber auch jegliche anderweitigen Substrate wie Kunststoffoberflächen oder Keramikoberflächen) eingebracht werden. Damit können beispielsweise optisch wirksame Gitterstrukturen für den Produktschutz erzeugt werden. Beispielsweise können damit antibakteriell wirksame Oberflächen erzeugt werden, da die Nanostrukturierung das Zellwachstum, die Haftfähigkeit und Benetzung der Oberflächen gezielt beeinflussen kann. Insbesondere bei Mikrofilter- oder Mikrosiebapplikationen kann eine solche zusätzliche Funktionalisierung sinnvoll sein (insbesondere beim Filtern oder Sieben feuchter Medien, in denen das Bakterien- oder Keimwachstum ohnehin ein Problem darstellen kann). Unter einem "Entschichten" kann ein Dünnschichtabtrag von dem Flachprodukt, insbesondere der Metallfolie, zu verstehen sein. Insbesondere bei mehrlagigen Systemen, beispielsweise einem metallisch beschichteten Kunststoffsubstrat (z.B. in Form eines metallisch beschichteten Kunststofffilms), kann gezielt die (metallische) Beschichtung abgetragen werden (ohne dabei das Kunststoffsubstrat) zu beschädigen. Dies kann mittels einer Laserbearbeitung erfolgen. Unter einem Beschriften oder Markieren kann insbesondere die Kennzeichnung des Flachprodukts (z.B. des Metallfolien-Bandes, einzelner Metallfolien-Zuschnitte, Metallfolien-Ausschnitte) im Hinblick auf eine bestimmte Charge, einen Produkttyps, Datum, bestimmte Eigenschaften oder dergleichen betreffen. Die Beschriftung oder Markierung kann beispielsweise im Wege eines Druckverfahrens, Prägeverfahrens, ein Gravierverfahren oder durch eine gezielte Materialabtragung erfolgen. Auch kann die Beschriftung oder Markierung im Wege eines Laserverfahrens (Laserschreiben, Lasermarkieren) erfolgen.

Nach einer weiteren Ausgestaltung der Erfindung kann die Flachprodukt-Aufnahmeeinheit samt dem darin angeordneten Flachprodukt relativ zur Laserbearbeitungsvorrichtung positioniert werden, wobei die Positionierung eine Relativbewegung der Flachprodukt-Aufnahmeeinheit relativ zur Laserbearbeitungsvorrichtung und/oder eine Relativbewegung der Laserbearbeitungsvorrichtung relativ zur Flachprodukt-Aufnahmeeinheit umfasst. Die Positionierung kann sowohl eine Vorpositionierung (vor der eigentlichen Laserbearbeitung) betreffen, als auch kontinuierliche Relativbewegungen der Flachprodukt-Aufnahmeeinheit relativ zur Laserbearbeitungsvorrichtung und/oder Relativbewegungen der Laserbearbeitungsvorrichtung relativ zur Flachprodukt-Aufnahmeeinheit. Für Details sei auf die vorangehenden Ausführungen zur Positionierung verwiesen. Es sei jedoch betont, dass bei einer Rolle-zu-Rolle (R2R) oder R2S Anordnung eine derartige Positionierung zwischen Flachprodukt und Laserbearbeitungsvorrichtung erfolgt, bei welcher das Flachprodukt positionsfest angeordnet wird (z.B. durch Anhalten der Rollen) und die Relativpositionierung durch eine Bewegung der Laserbearbeitungsvorrichtung, oder einer Komponente derselbigen, relativ zum Flachprodukt erfolgt. Es kann auch vorgesehen sein, dass ein R2R-Modul auf einem XY-Tisch oder Hubtisch (Z-Tisch) oder XYZ-Tisch angeordnet wird. Sodann kann das R2R Modul unmittelbar in der Laserbearbeitungsvorrichtung angeordnet sein. Dieses Modul stellt dann zusammen mit dem Tisch die Flachprodukt-Aufnahmeeinheit bereit. Bei einer R2R oder R2S Anordnung stellt die Rollenanordnung vorzugsweise als solche die Flachprodukt-Aufnahmeeinheit bereit. Gegebenenfalls kann eine zusätzliche (ggf. in z-Richtung verschiebbare) Platte als Flachprodukt-Aufnahmeeinheit vorgesehen sein, auf welcher das bandförmige Flachprodukt (z.B. die Metallfolie) während der Bearbeitung aufliegen kann.

Nach einer weiteren Ausgestaltung der Erfindung kann die Positionierung zumindest entlang einer senkrecht zu einer Flachprodukt-Ebene verlaufenden z-Achse erfolgen, wobei die Positionierung mit einer Positionierungsgenauigkeit von weniger als 10 µm, insbesondere weniger 5 µm erfolgt. Die Gewährleistung einer exakten Positionierung des Flachprodukts relativ zur Laserbearbeitungsrichtung in z-Richtung stellt einen entscheidenden Aspekt der vorliegenden Erfindung dar. Denn nur damit kann eine präziser Energieeintrag zur präzisen Ausbildung der Lochöffnungen im Wege der Laserbearbeitung sichergestellt werden.

Nach einer weiteren Ausgestaltung der Erfindung kann eine Fokuslagenüberprüfung des/der auf das Flachprodukt ausgerichteten Laserstrahlen in Richtung der z-Achse erfolgen und im Falle einer über ein vorbestimmtes Maß hinausgehenden Fokuslagenabweichung eine Fokuslagenkorrektur vorgenommen werden. Die Fokuslagenkorrektur kann durch eine Korrektur einer Relativlage zwischen dem in der Flachprodukt-Aufnahmeeinheit angeordneten Flachprodukt und der Laserbearbeitungsvorrichtung erfolgen, um so die z-Fokuslage zu korrigieren. Die Fokuslagenkorrektur kann zudem mit einem Fokusshifter vorgenommen werden, welcher Teil der Laserbearbeitungsvorrichtung sein kann. Mit dem Fokusshifter kann der Fokus der auf das Flachprodukt gerichteten Laserstrahlen in Bezug auf die z-Achse relativ zum Flachprodukt eingestellt werden. Sofern in der Laserbearbeitungsvorrichtung eine Modulationseinheit wie ein Spatial Light Modulator vorgesehen ist, kann durch Einblenden einer Linse (z.B. Fresnel Linse) bei gleichzeitiger Überlagerung von Linse und Zielverteilung der Fokuspunkt verschoben werden.

Nachgelagert zu der erwähnten Strahlpositionierungseinheit (z.B. ein Galvanometer-Scanner) kann eine Fokussiereinheit angeordnet sein. Diese kann dazu eingerichtet sein, einen oder mehrere Laserstrahlen (auch Teilstrahlen) auf das Flachprodukt (also die Bearbeitungsstellen) zu fokussieren. Beispielsweise kann die Fokussiereinheit als Linse ausgebildet sein, bevorzugt als F-Theta-Linse, die auch als Planfeldlinse bezeichnet wird. Dabei ist unter einer Linse in diesem Zusammenhang auch ein aus mehreren Linsen zusammengesetztes komplexes Linsensystem zu verstehen.

Die Fokuslagenüberprüfung kann mittels einer Messanordnung erfolgen, die einen oder mehrere der folgenden Sensoren umfasst: einen Abstandssensor, einen Laserkonfokal-Sensor, einen Kamerasensor oder ein Weißlicht-Interferometer. Bei einem Laserkonfokal-Sensor kann es sich um einen nach Art eines konfokalen Laser-Scanning-Mikroskop ausgebildeten Sensor handeln. Bei einem solchen Sensor handelt es sich um einen konfokalen Punktsensor, bei dem die Abtastung in der Schärfeebene mit beweglichen Ablenkspiegeln erfolgt. Der Messpunkt kann damit relativ schnell über das Objekt (Flachprodukt) geführt werden. Die Abtastung in Richtung der optischen Achse erfolgt typischerweise durch Verschieben des Objektivs oder des Objektes (hier des Flachprodukts). Das gezielte Führen eines konfokalen Beobachtungspunktes über das Flachprodukt erlaubt eine flexible Anpassung der Abtastdichte an die tatsächliche optische Auflösung. Bei einem Weißlicht-Interferometer handelt es sich um eine optische Messvorrichtung, mittels der eine berührungslose optische Messung verwirklicht wird, welche die Interferenz von breitbandigem Licht (Weißlicht) ausnutzt und somit 3D-Profilmessungen von Oberflächen erlaubt. Auch mit Abstandssensoren und/oder Kameras können Informationen zur Fokuslage beigesteuert werden. Auch kann die Fokuslage mittels eines taktilen Präzisionstasters bestimmt werden. Ein solcher Taster kann eine Auflösung von < 3 µm sowie einen zugänglichen Messbereich von > 12 mm aufweisen.

Nach einer weiteren Ausgestaltung der Erfindung kann die Laserbearbeitungsvorrichtung eine Scaneinheit umfassen, die dazu eingerichtet ist, einen oder mehrere gepulste Laserstrahlen innerhalb des Bearbeitungsfeldes zu bewegen und/oder zu positionieren. Unter einer Scaneinheit kann die vorangehend im Rahmen der verwendbaren Laserbearbeitungsvorrichtungen beschriebene Strahlpositionierungseinheit eingesetzt werden. Bei der Scaneinheit kann es sich insbesondere um einen Galvanometerscanner handeln. Die Scaneinheit kann also dazu verwendet werden, einen oder mehrere Laserstrahlen (auch Teilstrahlen) auf unterschiedliche Bearbeitungsstellen zu lenken bzw. einen Positionswechsel von Laserstrahlen zwischen den Bearbeitungsstellen zu gewährleisten. Ferner kann die Scaneinheit dazu verwendet werden, eine bewegende Bearbeitung in Bezug auf eine bestimmte Bearbeitungsstelle zu gewährleisten, wie es beispielsweise beim Laserbohren durch Trepanieren erforderlich ist.

Nach einer weiteren Ausgestaltung der Erfindung können mit dem erfindungsgemäßen Verfahren bzw. Fertigungssystem Lochöffnungen mit Durchmessern von 500 nm bis 10 µm ausgebildet werden. Möglich ist es aber auch Lochöffnungen mit größerem Durchmesser auszubilden, beispielsweise bis hin zu einigen Millimetern. Mit den Durchmesserangaben ist der größte Durchmesser der Lochöffnungen gemeint, denn die Lochöffnungen sind über ihre gesamte Tiefe in der Regel nicht vollständig zylindrisch ausgebildet, sondern konisch zulaufend. Für Mikrofilter- und Mikrosiebanwendungen können jedoch geringere Durchmesser der Lochöffnungen im Bereich von 500 nm bis 10 µm vorteilhaft sein. Bei derartigen Durchmessern können - je nach Bauteilgröße - teils bist bis zu 2 Millionen Bohrungen pro Bauteil bereitgestellt werden.

Nach einer weiteren Ausgestaltung der Erfindung kann die Laserleistung der von der Laserbearbeitungsvorrichtung erzeugten Laserstrahlen mittels eines Dünnschicht-Polarisators eingestellt werden. Dünnschicht-Polarisatoren (TFP) sind grundsätzlich bekannt, werden zur Polarisationstrennung eingesetzt und eignen sich besonders für hohe Laserleistungen.

Wie schon erwähnt, können die von der Laserbearbeitungsvorrichtung erzeugten Laserstrahlen eine Wellenlänge von 266 nm, 355 nm, 532 nm oder 1064 nm aufweisen. Je nach Anwendung oder zu bearbeitendem Material können unterschiedliche Laserwellenlängen vorteilhaft sein.

Nach einer weiteren Ausgestaltung der Erfindung kann ein bereitgestelltes Flachprodukt vor oder nach der Laserbearbeitung unter Einsatz einer Erkennungseinrichtung (z.B. einer Kamera) mit Blick auf ein insbesondere optisches Erkennungsmerkmal des Flachprodukts erkannt und einer Produkt- oder Bearbeitungskategorie zugeordnet wird. Die Erkennungseinrichtung kann mit einem Laserpointer verknüpft sein, welcher einem Bediener die aktuelle Position eines aufgenommenen Kamerabildes auf dem Flachprodukt visualisiert. Gleichzeitig kann der Laserpointer gezielt eine monochromatische Bildauswertung unterstützen. Mit der Erkennungseinrichtung können bestimmte charakteristische Merkmale auf dem Flachprodukt erkannt werden (z.B. Kreise, Kreuze, Passmarken etc.). Solche Merkmale können vor der Bearbeitung auf das Flachprodukt aufgebracht werden. Diese Merkmale können eine Orientierungshilfe zur Positionierung des Flachprodukts in der Flachprodukt-Aufnahmeeinheit darstellen. Ferner kann mit einer solchen Erkennungseinrichtung ein bestimmtes Flachprodukt in Bezug auf eine bestimmte Bearbeitungsaufgabe (z.B. eine bestimmte Anzahl, Durchmesser etc. von auszubildenden Lochöffnungen) erkannt werden. Auch können für eine bestimmte Bearbeitung nur bestimmte Merkmale freigegeben werden, d.h. wird ein Flachprodukt mit einem nicht freigegebenen bzw. über die Erkennungseinrichtung nicht erkennbaren Merkmal erfasst, so kann ein solches Flachprodukt für die Zufuhr in die Flachprodukt-Aufnahmeeinheit gesperrt bzw. aussortiert werden. Auch kann in Folge dessen ein Betriebstop des Fertigungssystems ausgelöst werden. Mit einem solchen Sicherheitsmechanismus werden Fehlbearbeitungen vermieden. Ferner kann vorgesehen sein, dass in Folge der Zuordnung einer Produkt- oder Bearbeitungskategorie eine bestimmte Art einer Vorverarbeitung, der Laserbearbeitung oder einer Nachbearbeitung des Flachprodukts erfolgt. Dies kann bedeuten, dass in Abhängigkeit der Erkennung bzw. Kategorisierung bestimmte Fertigungsparameter (z.B. bei der Laserbearbeitung) angepasst werden. Auch kann das Erkennungsmerkmal einen örtlichen Referenzpunkt für die Laserbearbeitung bereitstellen.

Nach einer weiteren Ausgestaltung der Erfindung kann im Anschluss an den Verfahrensschritt d) eine Qualitätsprüfung in Bezug auf die ausgebildete perforierte Struktur durchgeführt werden, insbesondere unter Einsatz eines Auflicht- oder Durchlichtverfahrens. Dazu können insbesondere Kamerasysteme samt einer oder mehrerer Kameras eingesetzt werden, die Bestandteil der Laserbearbeitungsvorrichtung sein kann/können. Unter einer Kamera kann insbesondere eine 3D-Kamera zu verstehen sein, die eine bildliche Darstellung einer räumlichen Situation, beispielsweise einer Oberflächentopographie, erlaubt.

Auf Basis der mit einer solchen 3D-Kamera erzeugten Daten, Bilder oder Aufnahmen lassen sich auch bestimmte Strukturen einer Oberfläche vermessen (z.B. der Durchmesser der Lochöffnungen, die Kontur der Lochöffnung, Abstände zwischen Lochöffnungen etc.). Eine dreidimensionale Abbildung des Flachprodukts lässt sich u.a. mit Stereokameras, einem Triangulationssystem, TOF (Time of Flight) Kameras, einem interferometrischen System oder Lichtfeldkameras aufnehmen. Die genannten Messinstrumente dienen der Qualitätsprüfung unmittelbar im Anschluss an die Laserbearbeitung. Die Messinstrumente können Bestandteil der Laserbearbeitungsvorrichtung sein oder extern dazu angeordnet sein.

Es kann erfindungsgemäß vorgesehen sein, dass im Wege der vorangehend erläuterten Qualitätsprüfung als fehlerhaft erkannte Bauteile von einer Sortiereinheit aussortiert werden. Eine solche Sortiereinheit kann der Laserbearbeitungsvorrichtung in Richtung des Produktstroms einer Fertigungslinie nachgeschaltet sein. Eine Sortiereinheit kann beispielsweise im Sinne einer Transportweiche ausgebildet sein, jedoch ohne Weiteres auch als Roboterarm, welcher ein als fehlerhaft erkanntes Flachprodukt mittels eines Greifmittels (oder anderweitigen Erfassungsmittel, z.B. einem Magnet, Saugnapf etc.) greift und aussortiert. Dadurch wird die Zuverlässigkeit und Reproduzierbarkeit des Verfahrens bzw. Fertigungssystems erhöht. Auch kann vorgesehen sein, eine Laserstanze oder mechanische Stanze zum Aussortieren fehlerhafter Bauteile vorzusehen (insbesondere zum Abtrennen sollbruchmarkierter Ausschnitte aus einem Metallfolien-Band). Auch kann eine solche Sortiereinheit dazu verwendet werden Stichproben von bearbeiteten Flachprodukten aus dem Produktstrom für eine gesonderte Analyse (z.B. einer Untersuchung mit einem Rasterelektronenmikroskop) auszuschleusen.

Es kann weiterhin erfindungsgemäß vorgesehen sein, dass im Anschluss an den Verfahrensschritt d) eine Weiterverarbeitung des mit der perforierten Struktur versehenen Flachprodukts erfolgt, insbesondere betreffend eine vollständige Abtrennung der sollbruchmarkierten Metallfolien-Ausschnitte aus den Metallfolien-Zuschnitten oder dem Metallfolien-Band, wobei die Abtrennung erfolgt durch Ätzen, Stanzen, Schneiden oder Prägen. Dazu kann eine geeignete Weiterverarbeitungsvorrichtung vorgesehen sein, die Teil des Fertigungssystems ist. Die Weiterverarbeitung kann jeglicher Art sein, und beispielsweise auch ein Umformen, Prägen, Stempeln, Markieren, Beschriften, Beschichten, Veredeln etc. des Flachprodukts bzw. der Flachprodukt-Ausschnitte betreffen. Auch können mehrere (z.B. der vorgenannten) Weiterverarbeitungsschritte vorgesehen sein, die jeweils in eigens dafür vorgesehenen Weiterverarbeitungsvorrichtungen (zugehörig zum erfindungsgemäßen Fertigungssystem) durchgeführt werden können.

In einer weiteren Ausgestaltung der Erfindung kann vorgesehen sein, dass die Laserbearbeitung unter Wasser erfolgt. Damit kann gemeint sein, dass sich das zu bearbeitende Flachprodukt unter Wasser befindet, d.h. die Bearbeitungsstellen befinden sich bei der Laserbearbeitung unter Wasser. Weiterhin kann damit ein Waterjet-Verfahren für Tieflochbohrungen hoher Aspektverhältnisse (Strukturbreite/Materialstärke) gemeint sein. Dazu kann die Laserstrahlung in einer Düse koaxial in einen dünnen Wasserstrahl eingekoppelt werden. Über diesen Lichtleiter wird die Laserstrahlung durch das Flachprodukt (Werkstück) geführt und behält dabei ihre Fokussierung bei.

Nach einer weiteren Ausgestaltung der Erfindung kann vorgesehen sein, dass die Laserbearbeitungsvorrichtung und/oder das bearbeitete Flachprodukt vor oder nach der Laserbearbeitung unter Einsatz einer Reinigungsvorrichtung gereinigt wird. Dabei kann es sich um eine Inline-Reinigung (innerhalb des Fertigungssystems) handeln. Unter einer Reinigung kann beispielsweise eine Ultraschall-Reinigung, eine CO₂-Schneestrahl-Reinigung oder eine auf einem nasschemischen Prozedere basierende Reinigung zu verstehen sein. Ebenso kann unter einer Reinigung eine Laser-Reinigung oder Oberflächenpolitur verstanden werden. Damit können insbesondere die bei der Laserbearbeitung freiwerdenden Materialreste (z.B. Materialstaub) von den Flachprodukten bzw. der Laserbearbeitungsvorrichtung entfernt werden. Die Reinigung der Flachprodukte kann auch außerhalb der Laserbearbeitungsvorrichtung vorgesehen sein. Dazu kann eine geeignete Reinigungsvorrichtung in Richtung des Produktstroms der Laserbearbeitungsvorrichtung nachgeschaltet sein. Gleichsam kann eine solche Vorrichtung in die Laserbearbeitungsvorrichtung integriert sein.

Weiterhin kann vorgesehen sein, dass bei einem erfindungsgemäßen Verfahren bzw. Fertigungssystem eine Vereinzelungseinheit verwendet wird, die dazu eingerichtet ist, Metallfolien-Ausschnitte oder anderweitig definierte Abschnitte aus dem Metallfolien-Band zu vereinzeln. Dies kann vor der Laserbearbeitung oder im Anschluss an die Laserbearbeitung erfolgen und eine R2S Bearbeitung bereitstellen. Einzelheiten hierzu wurden bereits vorangehend erörtert. Ferner kann auch eine mechanische Umformung des Flachprodukts vor oder nach der Laserbearbeitung erfolgen, z.B. die Ausprägung einer Sicke auf dem Flachprodukt. Nach einem weiteren Aspekt der Erfindung kann bei einem erfindungsgemäßen Verfahren bzw. Fertigungssystem vorgesehen sein, die Flachprodukte, die vereinzelten Metallfolien-Ausschnitte oder die anderweitig definierten und vereinzelten Abschnitte nach der Laserbearbeitung oder nach der Nachbearbeitung mittels einer Pick-and-Place Einheit auf einem Träger, insbesondere einer Klebefolie, zu platzieren. Die Pick-and-Place Einheit ist dabei vorzugsweise Teil des Fertigungssystems. Dabei kann die Pick-and-Place Einheit als im dreidimensionalen Raum bewegbarer Roboter (samt Roboterarm(en)) ausgebildet sein. Die Anordnung der vereinzelten Metallfolien-Ausschnitte oder Abschnitte auf einem Träger wie einer Klebefolie ermöglicht eine einfache Lagerung samt Weitertransport (z.B. zum Kunden). Auch kann eine Klebefolie zur Lagerung und zum Transport auf einen Rollenkörper (Wickelkörper) aufgewickelt werden. Auch können Klebefolienabschnitte gestapelt gelagert und transportiert werden.

Letztlich kann bei dem erfindungsgemäßen Verfahren bzw. Fertigungssystem eine Mehrzahl von Flachprodukt-Reservoirs und/oder eine Mehrzahl von Laserbearbeitungsvorrichtungen verwendet werden. Dadurch können sowohl die Bearbeitungsgeschwindigkeit als auch der Bearbeitungsdurchsatz weiter erhöht werden.

Weitere Vorteile, Ausgestaltungen und Weiterbildungen, die im Zusammenhang mit dem erfindungsgemäßen Verfahren bzw. dem erfindungsgemäßen Fertigungssystem stehen, sind anhand der nachfolgend beschriebenen Ausführungsbeispiele genauer erläutert. Diese sollen dem Fachmann die Erfindung verdeutlichen und ihn die Lage versetzen, die Erfindung auszuführen, ohne jedoch die Erfindung zu beschränken.

Die Ausführungsbeispiele werden anhand der Figuren näher erläutert. Dort zeigt:
- Fig. 1: ein erfindungsgemäßes Fertigungssystem nach einer ersten Ausführungsform der Erfindung;
- Fig. 2: ein erfindungsgemäßes Fertigungssystem nach einer ersten Ausführungsform der Erfindung;
- Fig. 3: ein erfindungsgemäßes Fertigungssystem nach einer dritten Ausführungsform der Erfindung;
- Fig. 4: eine schematische Darstellung eines Flachprodukts mit einer perforierten Struktur;
- Fig. 5: eine schematische Darstellung des Aufbaus einer Laserbearbeitungsvorrichtung, wie beim erfindungsgemäßen Fertigungssystem zum Einsatz kommen kann.

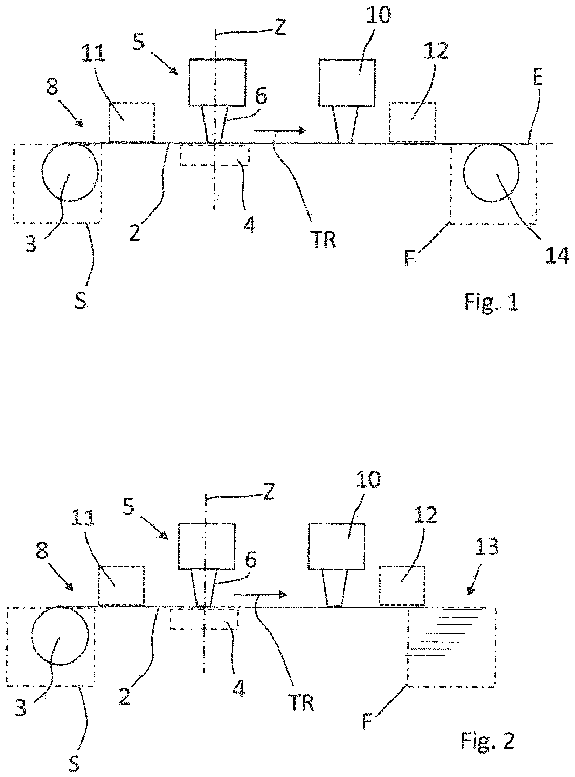

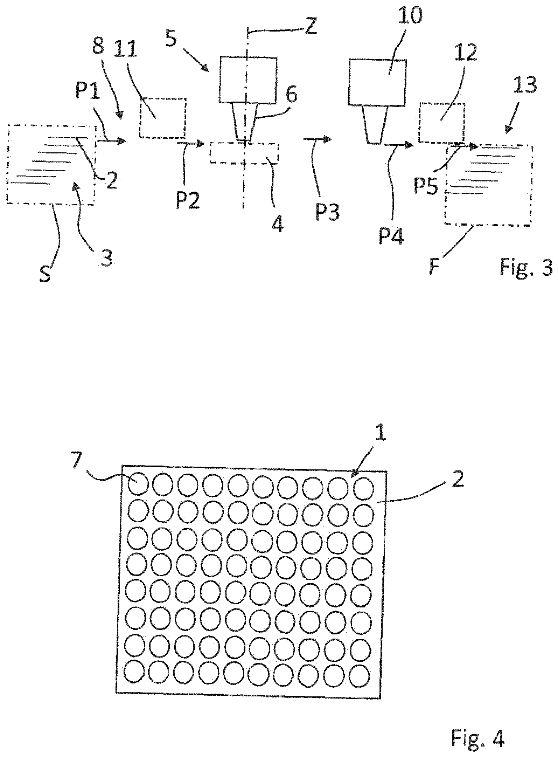

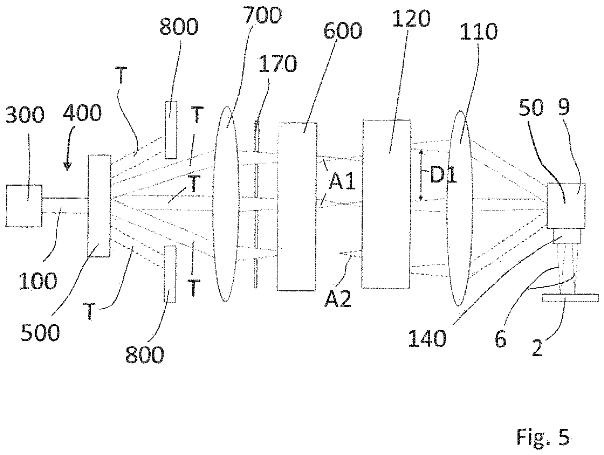

Die in den Figuren 1 bis 3 stark schematisiert wiedergegebenen Ausführungsformen von erfindungsgemäßen Fertigungssystemen umfassen jeweils eine Laserbearbeitungsvorrichtung 5, welche beispielsweise getreu dem in der Figur 5 dargestellten Aufbau ausgebildet sein kann. Damit lässt eine perforierte Struktur 1 in einem Flachprodukt 2 ausbilden, wie es z.B. in der Fig. 4 in einer schematischen Aufsicht dargestellt ist. Das zu fertigende Flachprodukt 2 kann ein Mikrofilter oder ein Mikrosieb sein.

Die Figur 5 zeigt eine Laserbearbeitungsvorrichtung 5, mit welcher eine Multistrahlbearbeitung, d.h. eine zeitgleiche Bearbeitung einer Mehrzahl von Bearbeitungsstellen, ermöglicht ist. Es sei ausdrücklich betont, dass auch jedwede anderweitig ausgebildete Laserbearbeitungsvorrichtungen (z.B. wie im allgemeinen Teil der Beschreibung beschrieben) zum Einsatz kommen können. Dies umfasst auch Laserbearbeitungsvorrichtungen zur Monostrahlbearbeitung.

Die in den Figuren 1 bis 3 dargestellten Fertigungssysteme umfassen jeweils ein Transfersystem TR (schematisiert mit Pfeilen dargestellt, in Fig. 3 anhand der Einzelpfeile P1 bis P5), mit welchem ein zu bearbeitendes Flachprodukt 2 von einem Fertigungssystem-Startpunkt S in Richtung eines Fertigungssystem-Endpunktes F transportiert werden kann. Entlang dieser Fertigungsstrecke bzw. Transportstrecke kann das Flachprodukt 2 unterschiedliche Funktionseinheiten des Fertigungssystems durchlaufen bzw. an diesen vorbeigeführt werden. Der Fertigungssystem-Startpunkt S sowie der Fertigungssystem-Endpunkt F kann unterschiedlicher Art sein, je nachdem auf welches Transportprinzip zurückgegriffen wird. Handelt es sich um eine Rolle-zu-Rolle (R2R) Anordnung zum Transport des Flachprodukts 2 (dies kann z.B. eine Metallfolie sein), so wird dieses von einem in Form einer Rolle ausgebildeten Flachprodukt-Reservoir 3 in Richtung einer Rolle 14 als Fertigungssystem-Endpunkt F befördert. Das Flachprodukt 2 (z.B. Metallfolie) wird also von einer Rolle abgerollt und nach der Durchführung eines oder mehrerer Bearbeitungsschritte auf einer Rolle 14 aufgerollt. Die Rollen können auf geeigneten Rollenhaltern gelagert sein. Zwischen der das Flachprodukt-Reservoir 3 ausbildenden Rolle und der Rolle 14 können weitere Rollen (z.B. Umlenkrollen) zwischengeschaltet sein (nicht dargestellt). Die Rollenanordnung des Flachprodukts 2 bildet hier eine Flachprodukt-Positioniereinheit 8 aus.

Handelt es sich um eine Rolle-zu-Sheet (R2S) Anordnung (Fig. 2), so kann das Flachprodukt (z.B. Metallfolie) von der das Flachprodukt-Reservoir 3 bildenden Rolle abgerollt und nach der Ausführung eines oder mehrerer Bearbeitungsschritte vereinzelt werden, z.B. mit einer Nachbearbeitungseinheit 12. Die Rollenanordnung des Flachprodukts 2 bildet hier die Flachprodukt-Positioniereinheit 8 aus. Mit der Nachbearbeitungseinheit 12 können somit Zuschnitte des Flachprodukts 2 (Metallfolien-Zuschnitte) erzeugt werden, beispielsweise durch Stanzen, Schneiden oder Ätzen. Diese können sodann entsprechend gelagert werden, z.B. in Stapeln 13. Bei diesem Ausführungsbeispiel erfolgt die Laserbearbeitung mittels der Laserbearbeitungsvorrichtung 5 am bandförmigen Flachprodukt 2, während die Vereinzelung in Zuschnitte des Flachprodukts 2 im Anschluss an die Bearbeitung (und ggf. Nachbearbeitung erfolgt).

Die Fig. 3 nimmt Bezug auf ein Ausführungsbeispiel, bei welchem bereits im Flachprodukt-Reservoir 3 Zuschnitte des Flachprodukts 2 vorliegen. Entsprechend werden die einzelnen Zuschnitte des Flachprodukts 2, ggf. auch ein Batch mehrerer Zuschnitte, von einer geeigneten Flachprodukt-Positioniereinheit 8 vom Flachprodukt-Reservoir 3 in Richtung der Flachprodukt-Aufnahmeeinheit 4 befördert. Die Flachprodukt-Positioniereinheit 8 kann in diesem Fall beispielsweise ein Roboter (samt Roboterarm), ein Rundschalttisch oder ein Förderband sein. Auch können mehrere Flachprodukt-Positioniereinheiten 8 vorgesehen sein, um einzelne Transportschritte (z.B. entlang der Pfeile P1 bis P5) der Zuschnitte von einer Station des Fertigungssystems zur nächsten durchzuführen.

Wie in den Fig. 1 bis 3 dargestellt, kann das Flachprodukt 2 ausgehend von einem Flachprodukt-Reservoir 3 (dieses kann mit dem Fertigungssystem-Startpunkt S zusammenfallen) in Richtung der Laserbearbeitungsvorrichtung 5 transportiert werden. Im Bereich der Laserbearbeitungsvorrichtung 5 kann das Flachprodukt 2 in einer Flachprodukt-Aufnahmeeinheit 4 positioniert werden. Im Falle einer R2R oder R2S Anordnung kann unterhalb des bandförmigen Flachprodukts 2 eine Platte oder ein Hubtisch angeordnet sein, welcher die Flachprodukt-Aufnahmeeinheit 4 ausbildet. Ein Abschnitt des durchgängigen Flachprodukt-Bandes kann auf oder in dieser Flachprodukt-Aufnahmeeinheit 4 gelagert werden. Jedoch kann auch vorgesehen sein, dass die R2R oder R2S Anordnung als solche die Flachprodukt-Aufnahmeeinheit 4 bereitstellt, also keine zusätzliche Platte oder dergleichen als Flachprodukt-Aufnahmeeinheit 4 vorgesehen ist. In diesem Fall stellt ein im Bereich der Laserbearbeitungsvorrichtung 5 vorgesehener Bereich, in welchem der zu bearbeitende Ausschnitt des Flachprodukts 2 angeordnet ist, die Flachprodukt-Aufnahmeeinheit 4 bereit. Es handelt sich sodann nicht um eine körperliche Flachprodukt-Aufnahmeeinheit 4 im Sinne einer Platte oder dergleichen. In der Laserbearbeitungsvorrichtung 5 wird das Flachprodukt 2 mittels einem oder mehreren Laserstrahl(en) 6 bearbeitet, um Lochöffnungen 7 und somit eine perforierte Struktur 1 in dem Flachprodukt 2 auszubilden.

Nach der Laserbearbeitung des Flachprodukts 2 in der Laserbearbeitungsvorrichtung 5 kann dieses unter Einsatz einer Erkennungseinrichtung 10 mit Blick auf ein insbesondere optisches Erkennungsmerkmal des Flachprodukts erkannt und beispielsweise einer Produkt- oder Bearbeitungskategorie zugeordnet werden. Auf Basis der Produkt- oder Bearbeitungskategorie kann eine Sortierung (z.B. der Zuschnitte in unterschiedliche Stapel) erfolgen. Die Erkennungseinrichtung 10 kann in Transportrichtung auch vor der Laserbearbeitungsvorrichtung 5 angeordnet sein, sodass eine Zuordnung einer Produkt- oder Bearbeitungskategorie vor der Ausführung der Laserbearbeitung erfolgt. In diesem Fall kann die Art der Bearbeitung von der Erkennung abhängen. Gleichsam kann mit der Erkennungseinrichtung 10 eine Qualitätsüberprüfung der perforierten Struktur 1 durchgeführt werden. Nach der Erfassung kann mit einer Auswerteeinheit (nicht dargestellt) ein Abgleich eines mit der Erkennungseinrichtung 10 erfassten Ist-Merkmals mit einem Soll-Merkmal durchgeführt und eine diesbezügliche Merkmalsabweichung ermittelt werden. Auf dieser Basis wird eine Bewertung bezüglich der Laserbearbeitung durchgeführt, insbesondere aber unter Berücksichtigung eines vorgegebenen Bewertungsschemas. Wird im Wege der Messung des Ist-Merkmals und der darauffolgenden Auswertung mit der Auswerteeinheit festgestellt, dass die Laserbearbeitung des Flachprodukts 2 den Qualitätsanforderungen entspricht, so kann das Flachprodukts freigegeben und mittels in Richtung des Fertigungssystem-Endpunktes F transportiert werden. Erfüllt das bearbeitete Flachprodukt 2 hingegen nicht die Qualitätsanforderungen, so kann es (z.B. über eine Materialweiche) aus dem Transfersystem geschleust werden und als Ausschuss deklariert werden. Gleiches kann auch durch eine geeignete mechanische Stanze erfolgen. Die Materialweiche kann (sofern es sich beim Flachprodukt 2 um einen Zuschnitt handelt) ein mit der Erkennungseinrichtung 10 gemessenes Flachprodukt 2 nach der Messung jedoch der Messvorrichtung 6 erneut zuführen (z.B. zur Fehlerkorrektur oder zur erneuten Bearbeitung). Ferner kann auch zwischen der Laserbearbeitungsvorrichtung 5 und der Erkennungseinrichtung 10 eine Materialweiche angeordnet sein. Über diese Materialweiche kann ein bearbeitetes Flachprodukt 2 an der Erkennungseinrichtung 10 vorbeigeleitet werden. Die Auswerteeinheit kann mit einer Steuereinheit des Fertigungssystems zusammenwirken. Beide Einheiten können dabei eine gemeinsame Einheit bilden und in Verbindung mit Sub-Steuereinheiten einzelner Funktionseinheiten des Fertigungssystems stehen. Beispielsweise ist die Steuereinheit signaltechnisch mit der Laserbearbeitungsvorrichtung 5, insbesondere einer dort vorgesehenen Rechen- und Steuereinheit verbunden. Die Rechen- und Steuereinheit bildet eine Sub-Steuereinheit der Steuereinheit. Auch ist die Steuereinheit mit der Erkennungseinrichtung 10 oder weiteren Komponenten des Fertigungssystems signaltechnisch verbunden.

Es kann vorgesehen sein, dass das Flachprodukt 2 zusätzlich zur Ausbildung der perforierten Struktur 1 im Wege einer Laserbearbeitung oder anderweitig entschichtet, gebohrt, funktionalisiert, geschnitten, beschriftet und/oder markiert wird. Dazu kann eine weitere Laserbearbeitungsvorrichtung vorgesehen sein (nicht dargestellt) oder eine entsprechende Vorbearbeitungseinheit 11 oder Nachbearbeitungseinheit 12. Auch diese Einheiten können mit einer Steuereinheit des Fertigungssystems signaltechnisch verbunden sein.

Die in den Fig. 1 bis 3 angedeutete Flachprodukt-Aufnahmeeinheit 4 kann samt dem darauf angeordneten Flachprodukt 2 relativ zur Laserbearbeitungsvorrichtung 5 positioniert werden, wobei die Positionierung eine Relativbewegung der Flachprodukt-Aufnahmeeinheit 4 relativ zur Laserbearbeitungsvorrichtung 5 umfasst. Zusätzlich oder alternativ kann eine Relativbewegung der Laserbearbeitungsvorrichtung 5 relativ zur Flachprodukt-Aufnahmeeinheit 4 zur Positionierung vorgesehen sein. Die Positionierung betrifft zumindest eine Bewegung entlang einer senkrecht zu einer Flachprodukt-Ebene E verlaufenden z-Achse Z. Ferner ist vorzugsweise eine Einrichtung zur Fokuslagenüberprüfung des/der auf das Flachprodukt 2 ausgerichteten Laserstrahlen 6 in Richtung der z-Achse Z vorgesehen. Im Falle einer über ein vorbestimmtes Maß hinausgehenden Fokuslagenabweichung kann eine Fokuslagenkorrektur vorgenommen werden. Die Fokuslagenüberprüfung erfolgt mittels einer Messanordnung, die einen oder mehrere der folgenden Sensoren umfasst: einen Abstandssensor, einen Laserkonfokal-Sensor, einen Kamerasensor oder ein Weißlicht-Interferometer. Diese Sensoren können in die Laserbearbeitungsvorrichtung 5 integriert oder separat dazu ausgebildet sein. Die Fokuslagenkorrektur kann durch eine Korrektur einer Relativlage zwischen dem in/auf der Flachprodukt-Aufnahmeeinheit 4 angeordneten Flachprodukt 2 und der Laserbearbeitungsvorrichtung 5 erfolgt, um die z-Fokuslage zu korrigieren. Dies kann beispielsweise durch einen z-Fokusshifter erfolgen.

Mit dem erfindungsgemäßen Fertigungssystem können vorgegebene Bearbeitungsstellen des Flachprodukts 2 (z.B. ein bestimmtes Muster einer perforierten Struktur) ausgebildet werden. Zur Ausführung des Fertigungssystems bzw. Verfahrens kann eine Laserbearbeitungsvorrichtung 5 zum Einsatz, deren technische Merkmale und Spezifikationen nachfolgend genauer beschrieben seien. Dabei handelt es sich um eine Laserbearbeitungsvorrichtung zur Multistrahlbearbeitung.

Auf das Flachprodukt 2 kann ein beliebiges Pattern an Laserspots bzw. Bearbeitungsspots abgebildet werden (in Anpassung an ein Pattern von auszubildenden Lochöffnungen 7 entsprechend der auszubildenden perforierten Struktur 1). Ohne Strahlselektion mittels einer Strahlselektionseinheit würde sich beim Einsatz einer Multistrahl-Laserbearbeitungsvorrichtung ein vordefinierter Spotarray (z.B. ein 3 mal 3 Array) auf dem Flachprodukt 2 abbilden. Die Laserspots haben dabei einen jeweils einen annähernd konstanten Abstand. Durch eine adäquate Selektion der in Richtung des Flachprodukts 2 weitergeleiteten Teilstrahlen T, verbleibt eine gewisse Anzahl von Stellen auf dem Flachprodukt spotfrei. Somit ist eine selektive Bearbeitung gewünschter Bearbeitungsstellen ermöglicht. Mit einer solchen Laserbearbeitungsvorrichtung 5 können Bearbeitungsstellen auf dem Flachprodukt 2 in einem parallelisierten Bearbeitungsprozess simultan bearbeitet werden können, und zwar in einer beliebigen räumlichen Kombination.

Wie in der Figur 5 wiedergegeben, kann die Laserbearbeitungsvorrichtung eine Mehrzahl von aus einem Laserstrahl 100 gebildeten Teilstrahlen T auf das zu bearbeitende Flachprodukt 2 projizieren, auf dem Flachprodukt 2 kann also ein Array aus Laserstrahlen 6 abgebildet werden. Die Anzahl und die Position, der auf das Flachprodukt 2 abgebildeten Teilstrahlen T, kann flexibel eingestellt werden. Ferner sind die Teilstrahlen T flexibel schaltbar, d.h. es können ohne Weiteres auch nur einzelne der dem Array zugehörigen Teilstrahlen T auf das Flachprodukt 2 gerichtet werden. Mit der Laserbearbeitungsvorrichtung 5 ist es also möglich, das Flachprodukt 2 selektiv an jenen Pixeln mit Laserstrahlung (bzw. den von den Teilstrahlen T ausgebildeten Laserspots) zu beaufschlagen, an welchen Lochöffnungen 7 auszubilden sind. Es können somit sowohl innerhalb eines vorgegebenen Scanbereichs (damit ist ein von den auf das Flachprodukt 2 projizierten Teilstrahlen T aufgespannter Bearbeitungsbereich gemeint), als auch über diesen Scanbereich hinweg Bearbeitungsstellen des Flachprodukts 2 bearbeitet werden. Letzteres ist insbesondere durch eine Relativverschiebung des Flachprodukts 2 in Bezug zu der positionsfesten Laserbearbeitungsvorrichtung 5 möglich. Auch die Laserbearbeitungsvorrichtung 5 kann dazu relativ zum positionsfesten Flachprodukt 2 oder bewegten Flachprodukt 2 bewegt werden.

Der Abstand der auf das Flachprodukt 2 abgebildeten Laserspots kann flexibel eingestellt werden. Dabei kann sich die Größenordnung des Abstands nach dem Abstand der auszubildenden Lochöffnungen 7 auf dem Flachprodukt 2 bemessen. Dies sei nachfolgend erläutert.

In Nähe der der Laserbearbeitungsvorrichtung 5 kann wie in den Figuren 1 bis 3 gezeigt, zunächst eine Flachprodukt-Aufnahmeeinheit 4 zur Aufnahme beziehungsweise Positionierung eines Flachprodukts 2 vorgesehen sein. Gleichsam kann diese Flachprodukt-Aufnahmeeinheit 4 Teil der Laserbearbeitungsvorrichtung 5 sein. Die Flachprodukt-Aufnahmeeinheit 4 kann in Form eines in einer Horizontalebene verfahrbaren xy-Tischs ausgebildet sein. Die Positionierung des Flachprodukts 2 in oder auf der Flachprodukt-Aufnahmeeinheit 4 kann gewichtskraftbasiert erfolgen oder unter Einsatz geeigneter Befestigungs- oder Positionierungsmittel (nicht dargestellt).

Die Laserbearbeitungsvorrichtung 5 umfasst zunächst eine Laserstrahlungsquelle 300 mit der ein Laserstrahl 100 erzeugt und entlang eines optischen Pfades 400 in Richtung des Flachprodukts 2 ausgesendet wird, insbesondere in Form von Laserpulsen. Der Laserstrahlungsquelle 300 ist in Strahlrichtung eine Strahlteilungseinheit 500 nachgeordnet. Die Strahlteilungseinheit 500 ist dazu eingerichtet, den Laserstrahl 100 in eine Vielzahl von Teilstrahlen T aufzuteilen. Bei der Strahlteilungseinheit 500 kann es sich um ein - an sich bekanntes - diffraktives optisches Element (DOE) handeln. Bereits mit der Strahlteilungseinheit 500 kann die Anzahl der Teilstrahlen T voreingestellt werden. Auch eine Grobeinstellung der in einer Ebene des Flachprodukts 2 vorliegenden Abstände zwischen den Laserspots der Teilstrahlen T (Laserstrahlen 6), lässt sich bereits mit der Strahlteilungseinheit 500 einstellen. Mit der Strahlteilungseinheit 500 lässt sich ein Laserstrahl 100 in Teilstrahlen T aufteilen, die ein zweidimensionales räumliches Muster von Laserspots bereitstellen.

Bezogen auf den Strahlengang ist nachgeordnet zu der Strahlteilungseinheit 500 eine Maske 800 vorgesehen, mit welcher ungewünschte Teilstrahlen T von höherer Ordnung herausgefiltert werden können. Bei der Maske 800 handelt es sich um eine optische Maske. Nachgeordnet zu der Maske 800 kann - wie in der Fig. 5 wiedergegeben - eine erste Relay-Einheit 700 vorgesehen sein. Die Relay-Einheit 700 ist dazu eingerichtet, die auf die Relay-Einheit 700 auftreffenden Teilstrahlen T (es handelt sich dabei um die nicht mit der Maske 8 herausgefilterten Teilstrahlen T) zu fokussieren und parallel auszurichten. Bei der Relay-Einheit 700 kann es sich um eine Einzellinse handeln (d.h. die Relay-Einheit 700 kann z.B. als Achromat ausgebildet sein), oder aber um ein komplexes Linsensystem.

Nachgeordnet zu der Relay-Einheit 700 ist eine Strahlselektionseinheit 600 vorgesehen, die dazu eingerichtet ist, eine erste Anzahl A1 der Teilstrahlen T entlang des optischen Pfades 400 in Richtung des zu bearbeitenden Flachprodukts 2 weiterzuleiten bzw. auszulenken. Weiterhin ist die Strahlselektionseinheit 600 dazu eingerichtet, eine zweite Anzahl A2 der Teilstrahlen T aus dem optischen Pfad 400 abzulenken. Die Ablenkung kann dabei in Richtung eines optisches Nebenpfads erfolgen (nicht dargestellt), beispielsweise in Richtung einer Strahlblockiereinheit.

Die Strahlselektionseinheit 600 kann beispielsweise eine Spiegelanordnung umfassen, die aus einem Array einzelner Spiegel zusammengesetzt ist. Bei den Spiegeln kann es sich um MEMS-Spiegel oder Mikrospiegel handeln. Erfindungsgemäß ist dabei vorgesehen, dass ein jeder auf die Strahlselektionseinheit 600 auftreffender Teilstrahl T auf maximal bzw. genau einen Spiegel auftrifft. Die Spiegel können über eine Steuereinheit einzeln angesteuert und verkippt bzw. bewegt werden, um somit jeden Teilstrahl T individuell ablenken zu können. Wie schon erwähnt, kann eine bestimmte Anzahl A1 der Teilstrahlen T entlang des optisches Pfads 400 in Richtung des Flachprodukts 2 weitergeleitet bzw. abgelenkt werden, oder aber aus dem optischen Pfad 400 entfernt werden. Die Spiegel können beispielsweise zwei Stellungen einnehmen, insbesondere eine ON-Stellung und eine OFF-Stellung. In der ON-Stellung sind die Spiegel beispielsweise ausgeschaltet, in der OFF-Stellung hingegen sind die Spiegel um einen vorgegebenen Winkel, beispielsweise 10°, in Bezug zu der ON-Position ausgelenkt. Je nach Stellung der Spiegel wird ein auf einen solchen Spiegel auftreffender Teilstrahl T entlang des optischen Pfades 400 bzw. einem entsprechendem Strahlengang weitergeleitet (abgelenkt) oder aber entlang eines optischen Nebenpfades (dieser weicht von dem optischen Pfad 400 ab). In dem optischen Nebenpfad kann beispielsweise eine statische Strahlblockiereinheit angeordnet sein. Die dort auftreffenden Teilstrahlen T werden also nicht in Richtung des Flachprodukts 2 abgelenkt. Die ON-Stellung führt also zu einer Auslenkung der Teilstrahlen T in Richtung der Strahlblockiereinheit, während die OFF-Stellung zu einer Weiterleitung der Teilstrahlen T entlang des optischen Pfades 400 in Richtung des Flachprodukts 2 führt. Je nach Stellung der Spiegel ergibt sich auf dem Flachprodukt 2 ein vorkonfiguriertes Pattern an Laserspots bzw. Bearbeitungsspots. Sind alle Spiegel in ihrer ON-Stellung geschaltet, ergibt sich ein vordefinierter Spotarray (z.B. ein 10 mal 10 Array), wobei alle Bearbeitungsstellen mit einem Laserpot besetzt sind. Die Laserspots haben dabei einen jeweils einen annähernd konstanten Abstand. Befinden sich nicht alle Spiegel in ihrer ON-Prozedere, so verbleibt eine gewisse Anzahl der Gitterplätze spotfrei. Mit einem solchen Verfahren können folglich eine Vielzahl verschiedener Konfigurationen von auf dem Flachprodukt 2 abgebildeten Laserspots bereitgestellt werden.

Die Strahlselektionseinheit 600 kann in einer alternativen Ausführung auch transmittiv bzw. absorptiv ausgebildet sein, insbesondere als zumindest ein auf einem Chip beweglich angeordnetes Blockierelement.

Eine weitere Maske 170 kann zwischen der ersten Relay-Einheit 700 und der zweiten Relay-Einheit 110 vorgesehen sein. Die Maske 170 kann insbesondere vor der Strahlselektionseinheit 600 angeordnet und zum Herausfiltern höherer Ordnungen und der nullten Ordnung vorgesehen sein.

Nachgeordnet zu der Strahlselektionseinheit 600 kann eine Zoom-Einheit 120 vorgesehen sein. Die Zoom-Einheit 120 kann dazu eingerichtet sein, die Teilstrahlen T simultan in ihrer Ausrichtung bzw. Neigung und ihrem Abstand relativ zueinander anzupassen. Entsprechend wirkt sich die über die Zoom-Einheit 120 ausgeführte Justierung der Teilstrahlen T mittelbar auch auf die Ausrichtung und den Abstand der auf das Flachprodukt 2 projizierten Laserspots aus. Wie in der Figur 5 dargestellt, lässt sich ein zwischen den Teilstrahlen vorliegender Abstand D1 sowie ein auf dem Werkstück 2 vorliegender Abstand der Laserspots über die Zoom-Einheit 120 anpassen.

Nachgelagert zu der Zoom-Einheit 120 ist eine zweite Relay-Einheit 110 angeordnet. Die zweite Relay-Einheit 110 ist dazu eingerichtet, die erste Anzahl A1 der Teilstrahlen T zu kollimieren, sodass die kollimierten Teilstrahlen T in einem nachgeordnet zu der zweiten Relay-Einheit 110 angeordneten Punkt 50 (einem Fokalpunkt) zusammenlaufen. Faktisch wird also ein Bündel von Teilstrahlen im Fokalpunkt zusammengeführt. Auch bei der zweiten Relay-Einheit 110 kann es sich - wie bei der ersten Relay-Einheit 700 - um eine Einzellinse oder um ein komplexes Linsensystem handeln.

Weiterhin umfasst die Laserbearbeitungsvorrichtung eine Scaneinheit 9 (Strahlpositionierungseinheit), bei welcher es sich beispielsweise um einen Galvanometerscanner handeln kann, der dazu eingerichtet ist, zu der ersten Anzahl A1 der Teilstrahlen T korrespondierende Laserspots auf dem Flachprodukt 2 abzubilden. Je nach über die Strahlselektionseinheit 600 eingestelltem Pattern, wird also ein definiertes Spotmuster - bzw. eine Anordnung von Teilstrahlen T auf das Flachprodukt 2 projiziert. Entsprechend dem vorliegenden Spotmuster kann mittels der Scaneinheit 9 sowohl eine simultan und synchron ausgeführte Positionierbewegung der auf das Flachprodukt 2 projizierten Laserspots ausgeführt werden, als auch eine simultan und synchron ausgeführte Bearbeitungsbewegung. Die Positionierbewegung kann innerhalb eines über die Scaneinheit 9 zugänglichen Scanbereichs ausgeführt werden.

Über eine Relativverschiebung zwischen Flachprodukt 2 und Laserbearbeitungsvorrichtung 5 kann ein bestimmter Bearbeitungsbereich des Flachprodukts 2 angesteuert werden, das Scanfeld wird also in einem bestimmten Teilbereich (Bearbeitungsbereich) der Flachproduktoberfläche positioniert. Entsprechend der in diesem Teilbereich des Flachprodukt 2 Verteilung auszubildender Lochöffnungen 7, wird eine auf diese Verteilung angepasste Bearbeitung vorgenommen. Dies meint, dass die Anzahl der auf das Flachprodukt 2 auftreffenden Teilstrahlen T bzw. Laserstrahlen 6 bzw. der zugehörigen Laserspots an die Anzahl der in dem zu bearbeitenden Ausschnitt auszubildenden Lochöffnungen 7 angepasst wird. Ebenso wird die räumliche Anordnung der Laserspots 18 an die räumliche Verteilung der auszubildenden Lochöffnungen 7 in dem jeweiligen Ausschnitt des Flachprodukts 2 angepasst. Die Einstellung der Anzahl und räumlichen Anordnung der Teilstrahlen T bzw. der zugehörigen Laserstrahlen 6 und Laserspots kann über eine Steuereinheit vorgenommen werden, die mit der Strahlselektionseinheit 600, der Zoom-Einheit 120 und der Scaneinheit 9 in einer Signal- und Datenverbindung stehen kann. Des Weiteren kann die Steuereinheit auch mit der Strahlteilungseinheit 500 in einer Signal- und Datenverbindung stehen.

Bestandteil der Scaneinheit 9 kann zudem eine Fokussiereinheit 140 sein, die jene von dem Galvanometerscanner ausgelenkten Laserstrahlen 6 auf das Flachprodukt 2 fokussiert. Dabei werden die Laserspots der Laserstrahlen 6 (entsprechend dem eingestellten Spotmuster) auf dem Flachprodukt 2 abgebildet.

### Bezugszeichenliste

- 1: perforierte Struktur
- 2: Flachprodukt
- 3: Flachprodukt-Reservoir
- 4: Flachprodukt-Aufnahmeeinheit
- 5: Laserbearbeitungsvorrichtung
- 6: Laserstrahl
- 7: Lochöffnung
- 8: Flachprodukt-Positioniereinheit
- 9: Scaneinheit
- 10: Erkennungseinrichtung
- 11: Vorbearbeitungseinheit
- 12: Nachbearbeitungseinheit
- 13: Stapel
- 14: Rolle
- 50: Punkt
- 100: Laserstrahl
- 110: zweite Relay-Einheit
- 120: Zoom-Einheit
- 140: Fokussiereinheit
- 170: Maske
- 300: Laserstrahlungsquelle
- 400: optischer Pfad
- 500: Strahlteilungseinheit
- 600: Strahlselektionseinheit
- 700: erste Relay-Eineit
- 800: Maske
- A1: erste Anzahl
- A2: zweite Anzahl
- D1: Abstand
- E: Flachprodukt-Ebene
- F: Endpunkt
- P1 - P5: Pfeil
- S: Startpunkt
- T: Teilstrahl
- TR: Transfersystem
- Z: z-Achse

## Patentansprüche

1. Verfahren zur Fertigung eines mit einer perforierten Struktur (1) versehenen Flachprodukts (2), aufweisend die folgenden Verfahrensschritte:
a) Bereitstellen eines Flachprodukts (2) in einem Flachprodukt-Reservoir (3);
b) Anordnen des bereitgestellten Flachprodukts (2) in einer Flachprodukt-Aufnahmeeinheit (4);
c) Laserbearbeiten des Flachprodukts (2) unter Einsatz einer Laserbearbeitungsvorrichtung (5): Erzeugen, Ausrichten und Applizieren eines oder mehrerer gepulster Laserstrahlen (6) auf eine oder mehrere Bearbeitungsstellen in einem vorgegebenen Bearbeitungsfeld des Flachprodukts (2), wodurch in dem Flachprodukt (2) an der oder den Bearbeitungsstelle(n) Lochöffnungen (7), vorzugsweise mit Durchmessern von 500 nm bis 10 µm, ausgebildet werden, welche die perforierte Struktur (1) bereitstellen;
d) optionales Wiederholen des Verfahrensschrittes c) in einem oder mehreren weiteren Bearbeitungsfeld(ern)
**dadurch gekennzeichnet, dass**
das Erzeugen, Ausrichten und Applizieren des einen oder der mehreren gepulsten Laserstrahlen (6) in Schritt c) erfolgt unter Einsatz einer eine Laserbearbeitungsvorrichtung (5), die umfasst:
eine Laserstrahlungsquelle (300), die dazu eingerichtet ist, einen Laserstrahl (100) zu erzeugen und entlang eines optisches Pfades (400) in Richtung des Flachprodukts (2) auszusenden; eine der Laserstrahlungsquelle (300) in Strahlrichtung nachgeordnete Strahlteilungseinheit (500), die dazu eingerichtet ist, den Laserstrahl (100) in eine Vielzahl von Teilstrahlen (T) aufzuteilen, die in einem vorgegebenen räumlichen Pattern verteilt sind; eine der Strahlteilungseinheit (500) in Strahlrichtung nachgeordnete Strahlselektionseinheit (600), die dazu eingerichtet ist, eine erste Anzahl (A1) der Teilstrahlen (T) entlang des optischen Pfades (400) in Richtung des Flachprodukts (2) weiterzuleiten, und dazu eingerichtet ist, eine zweite Anzahl (A2) der Teilstrahlen (T) aus dem optischen Pfad (400) abzulenken; sowie eine Scaneinheit (9), die dazu eingerichtet ist, zu der ersten Anzahl (A1) der Teilstrahlen (T) korrespondierende Laserspots auf dem Flachprodukt (2) abzubilden und eine Positionier- und/oder Bearbeitungsbewegung der auf das Flachprodukt (2) projizierten Laserspots innerhalb des Bearbeitungsfeldes auszuführen.

2. Verfahren nach Anspruch 1, wobei eine Flachprodukt-Aufnahmeeinheit (4) verwendet wird, die eine Fixiereinrichtung aufweist, mit welcher das Flachprodukt (2) bei dessen Anordnung in der Flachprodukt-Aufnahmeeinheit (4) fixierbar ist, wobei die Fixiereinrichtung insbesondere eine Vakuum-Spannplatte, eine Magnet-Spannplatte oder eine Elektro-Spannplatte ist.

3. Verfahren nach Anspruch 1 oder 2, wobei das Flachprodukt (2) eine Metallfolie mit einer bevorzugten Materialstärke von 5 µm bis 100 µm ist, die mittels einer Flachprodukt-Positioniereinheit (8) stückweise, beispielsweise in Form von Metallfolien-Zuschnitten, oder kontinuierlich als Metallfolien-Band der Flachprodukt-Aufnahmeeinheit (4) zugeführt wird.

4. Verfahren nach einem der vorangehenden Ansprüche, wobei das Flachprodukt-Reservoir (3) ein Lager für eine Mehrzahl der Metallfolien-Zuschnitte oder eine Rolle zur Lagerung des aufgerollten Metallfolien-Bandes bereitstellt, wobei vor oder nach der Laserbearbeitung, eine Anzahl von Metallfolien-Ausschnitten in den Metallfolien-Zuschnitten oder dem Metallfolien-Band sollbruchmarkiert wird, wobei das Sollbruchmarkieren einen Ätzprozess, einen Stanzprozess, einen Schneidprozess oder einen Prägeprozess umfasst, wobei das Sollbruchmarkieren eine Sollbruchmarkierung ausbildet, die ein vereinfachtes Lösen der Metallfolien-Ausschnitte aus dem Metallfolien-Band ermöglicht, und wobei die sollbruchmarkierten Metallfolien-Ausschnitte vorzugsweise einen kreisförmige Kontur mit einem Durchmesser von 5 mm - 20 mm, insbesondere 10 mm aufweisen.

5. Verfahren nach einem der vorangehenden Ansprüche, wobei die Flachprodukt-Aufnahmeeinheit (4) samt dem darin angeordneten Flachprodukt (2) relativ zur Laserbearbeitungsvorrichtung (5) positioniert wird, wobei die Positionierung eine Relativbewegung der Flachprodukt-Aufnahmeeinheit (4) relativ zur Laserbearbeitungsvorrichtung (5) und/oder eine Relativbewegung der Laserbearbeitungsvorrichtung (5) relativ zur Flachprodukt-Aufnahmeeinheit (4) umfasst, wobei die Positionierung zumindest entlang einer senkrecht zu einer Flachprodukt-Ebene (E) verlaufenden z-Achse (Z) erfolgt, wobei die Positionierung mit einer Positionierungsgenauigkeit von weniger als 10 µm, insbesondere weniger 5 µm erfolgt.

6. Verfahren nach einem der vorangehenden Ansprüche, wobei eine Fokuslagenüberprüfung des/der auf das Flachprodukt (2) ausgerichteten Laserstrahlen in Richtung der z-Achse (Z) erfolgt und im Falle einer über ein vorbestimmtes Maß hinausgehenden Fokuslagenabweichung eine Fokuslagenkorrektur vorgenommen wird, wobei die Fokuslagenüberprüfung mittels einer Messanordnung erfolgt, die einen oder mehrere der folgenden Sensoren umfasst: einen Abstandssensor, einen Laserkonfokal-Sensor, einen Kamerasensor oder ein Weißlicht-Interferometer, und wobei die Fokuslagenkorrektur durch eine Korrektur einer Relativlage zwischen dem in der Flachprodukt-Aufnahmeeinheit (4) angeordneten Flachprodukt (2) und der Laserbearbeitungsvorrichtung (5) erfolgt, um die z-Fokuslage zu korrigieren.

7. Verfahren nach einem der vorangehenden Ansprüche, wobei ein bereitgestelltes Flachprodukt (2) vor oder nach der Laserbearbeitung unter Einsatz einer Erkennungseinrichtung (10) mit Blick auf ein insbesondere optisches Erkennungsmerkmal des Flachprodukts (2) erkannt und einer Produkt- oder Bearbeitungskategorie zugeordnet wird, wobei in Folge der Zuordnung einer Produkt- oder Bearbeitungskategorie eine bestimmte Art einer Vorverarbeitung, der Laserbearbeitung oder einer Nachbearbeitung des Flachprodukts (2) erfolgt, wobei das Erkennungsmerkmal vorzugsweise einen örtlichen Referenzpunkt für die Laserbearbeitung bereitstellt.

8. Verfahren nach Anspruch 1, wobei im Anschluss an den Verfahrensschritt d) eine Qualitätsprüfung in Bezug auf die ausgebildete perforierte Struktur durchgeführt wird, insbesondere unter Einsatz eines Auflicht- oder Durchlichtverfahrens, wobei vorzugsweise im Wege der Qualitätsprüfung als fehlerhaft erkannte Bauteile von einer Sortiereinheit aussortiert werden.

9. Verfahren nach einem der vorangehenden Ansprüche, wobei im Anschluss an den Verfahrensschritt d) eine Weiterverarbeitung des mit der perforierten Struktur versehenen Flachprodukts (2) erfolgt, insbesondere betreffend eine vollständige Abtrennung der sollbruchmarkierten Metallfolien-Ausschnitte aus den Metallfolien-Zuschnitten oder dem Metallfolien-Band, wobei die Abtrennung erfolgt durch Ätzen, Stanzen, Schneiden oder Prägen.

10. Verfahren nach einem der vorangehenden Ansprüche, wobei eine Vereinzelungseinheit verwendet wird, die dazu eingerichtet ist, Metallfolien-Ausschnitte oder anderweitig definierte Abschnitte aus dem Metallfolien-Band zu vereinzeln, wobei die Flachprodukte, die vereinzelten Metallfolien-Ausschnitte oder die anderweitig definierten und vereinzelten Abschnitte nach der Laserbearbeitung oder nach der Nachbearbeitung mittels einer Pick-and-Place Einheit auf einem Träger, insbesondere einer Klebefolie, platziert werden.

11. Fertigungssystem zur Fertigung eines mit einer perforierten Struktur (1) versehenen Flachprodukts (2), wobei das Fertigungssystem zur Ausführung eines Verfahrens nach einem der Ansprüche 1 bis 10 ausgebildet ist, mit
a) einem Flachprodukt-Reservoir (3) zur Lagerung des Flachprodukts (2),
b) einer Flachprodukt-Aufnahmeeinheit (4), die dazu eingerichtet ist, das Flachprodukt (2) aufzunehmen;
c) einer Flachprodukt-Positioniereinheit zur Anordnung des Flachprodukts (2) in der Flachprodukt-Aufnahmeeinheit (4),
d) einer Laserbearbeitungsvorrichtung (5), die dazu eingerichtet ist, einen oder mehrere gepulste Laserstrahlen (6) zu erzeugen und auf eine oder mehrere Bearbeitungsstellen in einem vorgegebenen Bearbeitungsfeld des Flachprodukts (2) auszurichten und zu applizieren, um in dem Flachprodukt (2) an der einen oder den mehreren Bearbeitungsstellen Lochöffnungen (7) auszubilden, welche die perforierte Struktur (1) bereitstellen,
**dadurch gekennzeichnet, dass** die Laserbearbeitungsvorrichtung (5) umfasst:
eine Laserstrahlungsquelle (300), die dazu eingerichtet ist, einen Laserstrahl (100) zu erzeugen und entlang eines optisches Pfades (400) in Richtung des Flachprodukts (2) auszusenden; eine der Laserstrahlungsquelle (300) in Strahlrichtung nachgeordnete Strahlteilungseinheit (500), die dazu eingerichtet ist, den Laserstrahl (100) in eine Vielzahl von Teilstrahlen (T) aufzuteilen, die in einem vorgegebenen räumlichen Pattern verteilt sind; eine der Strahlteilungseinheit (500) in Strahlrichtung nachgeordnete Strahlselektionseinheit (600), die dazu eingerichtet ist, eine erste Anzahl (A1) der Teilstrahlen (T) entlang des optischen Pfades (400) in Richtung des Flachprodukts (2) weiterzuleiten, und dazu eingerichtet ist, eine zweite Anzahl (A2) der Teilstrahlen (T) aus dem optischen Pfad (400) abzulenken; sowie eine Scaneinheit (9), die dazu eingerichtet ist, zu der ersten Anzahl (A1) der Teilstrahlen (T) korrespondierende Laserspots auf dem Flachprodukt (2) abzubilden und eine Positionier- und/oder Bearbeitungsbewegung der auf das Flachprodukt (2) projizierten Laserspots innerhalb des Bearbeitungsfeldes auszuführen.

## Claims

1. A method for the manufacture of a flat product (2) provided with a perforated structure (1), comprising the following process steps:
a) providing a flat product (2) in a flat product reservoir (3);
b) arranging the provided flat product (2) in flat product receiving unit (4);
c) laser processing of the flat product (2) using a laser processing device (5): generating, aligning and applying one or more pulsed laser beams (6) to one or more processing points in a predefined processing field of the flat product (2), whereby in the flat product (2) at the processing point(s) hole openings (7) are formed, preferably with diameters from 500 nm to 10 µm, which provide the perforated structure (1);
d) optional repetition of the process step c) in one or more other processing field(s)
**characterised in that** the generation, alignment and application of the one or more pulsed laser beams (6) in step c) takes place using a laser processing device (5), which comprises:
a laser radiation source (300) which is set up to generate a laser beam (100) and to emit it along an optical path (400) in the direction of the flat product (2); a beam splitting unit (500) downstream of the laser radiation source (300) in the beam direction, which is set up to split the laser beam (100) into a plurality of partial beams (T), which are distributed in a predefined spatial pattern; a beam selection unit (600) downstream of the beam splitting unit (500) in the beam direction, which is set up to relay a first number (Al) of the partial beams (T) along the optical path (400) in the direction of the flat product (2), and is set up to deflect a second number (A2) of the partial beams (T) from the optical path (400); as well as a scanning unit (9), which is set up to image laser spots corresponding to the first number (Al) of the partial beams (T) on the flat product (2) and to perform a positioning and/or processing movement of the laser spots projected onto the flat product (2) within the processing field.

2. The method according to claim 1, wherein a flat product receiving unit (4) is used, which has a fixing device by means of which the flat product (2) can be fixed during the arrangement in the flat product receiving unit (4), wherein the fixing device is in particular a vacuum clamping plate, a magnetic clamping plate or an electric clamping plate.

3. The method according to claim 1 or 2, wherein the flat product (2) is a metal foil with a preferred material thickness of 5 µm to 100 µm, which is fed to the flat product receiving unit (4) by means of a flat product positioning unit (8) piece by piece, for example in the form of metal foil blanks, or continuously as a metal foil strip.

4. The method according to any one of the preceding claims, wherein the flat product reservoir (3) provides a storage for a plurality of the metal foil blanks or a roll for storing the coiled metal foil strip, wherein before or after laser processing, a number of metal foil cut-outs in the metal foil blanks or the metal foil strip are marked with a predetermined breaking point, wherein the marking with a predetermined breaking point is an etching process, a stamping process, a cutting process or an embossing process, wherein the marking with a predetermined breaking point forms a predetermined breaking point mark, which enables a simplified detachment of the metal foil cut-outs from the metal foil strip, and wherein the metal foil cut-outs marked with a predetermined breaking point preferably have a circular contour with a diameter of 5 mm - 20 mm, in particular 10 mm.

5. The method according to any one of the preceding claims, wherein the flat product receiving unit (4) together with the flat product (2) arranged therein is positioned relative to the laser processing device (5), wherein the positioning comprises a relative movement of the flat product receiving unit (4) relative to the laser processing device (5) and/or a relative movement of the laser processing device (5) relative to the flat product receiving unit (4), wherein the positioning takes place at least along a z-axis (Z) running perpendicular to a flat product plane (E), wherein the positioning takes place with a positioning accuracy of less than 10 µm, in particular less than 5 µm

6. The method according to any one of the preceding claims, wherein a focus position check of the laser beam(s) aimed at the flat product (2) in the direction of the z-axis (Z) takes place and, in the case of a focus position deviation exceeding a predetermined measure, a focus position correction is carried out, wherein the focus position check takes place by means of a measurement arrangement comprising one or more of the following sensors: a distance sensor, a laser confocal sensor, a camera sensor or a white light interferometer, and wherein the focus position correction takes place by correcting a relative position between the flat product (2) arranged in the flat product receiving unit (4) and the laser processing device (5) in order to correct the z-focus position.

7. The method according to any one of the preceding claims, wherein a provided flat product (2) is detected before or after laser processing by using a detection device (10) with regard to an in particular optical distinguishing feature of the flat product (2) and assigned to a product or processing category, wherein as a result of the assignment of a product or processing category a particular type of pre-processing, laser processing or post-processing of the flat product (2) takes place, wherein the distinguishing feature preferably provides a local reference point for the laser processing.

8. The method according to claim 1, wherein a quality check is carried out in respect of the formed perforated structure following process step d), in particular by using a reflected light or transmitted light method, wherein components detected as defective preferably by way of quality testing are sorted out by a sorting unit.

9. The method according to any one of the preceding claims, wherein further processing of the flat product (2) provided with the perforated structure takes place after process step d), in particular with regard to a complete separation of the metal foil cut-outs marked with predetermined break points from the metal foil blanks or the metal foil strip, wherein the separation is effected by etching, punching, cutting or embossing.

10. The method according to any one of the preceding claims, wherein a separation unit, which is set up to separate metal foil cut-outs or otherwise defined sections from the metal foil strip, wherein the flat products, the separated metal foil cut-outs or the otherwise defined and separated sections are placed on a carrier, in particular an adhesive film, by means of a pick-and-place unit after the laser processing or after the post-processing.

11. A manufacturing system for the production of a flat product (2) provided with a perforated structure (1), wherein the manufacturing system is designed to carry out a process according to any one of claims 1 to 10, with
a) a flat product reservoir (3) for storing the flat product (2),
b) a flat product receiving unit (4), which is set up to receive the flat product (2),
c) a flat product positioning unit for the arrangement of the flat product (2) in the flat product receiving unit (4),
d) a laser processing device (5), which is set up to a generate one or more pulsed laser beams (6) and to aim and apply them to one or more processing points in a predetermined processing field of the flat product (2), in order to form in the flat product (2) at the one or more processing points hole openings (7) which provide the perforated structure (1),
**characterised in that** the laser processing device (5) comprises:
a laser radiation source (300), which is set up to generate a laser beam (100) and to emit it along an optical path (400) in the direction of the flat product (2); a beam splitting unit (500) downstream of the laser radiation source (300) in the beam direction, which is set up to split the laser beam (100) into a plurality of partial beams (T) which are distributed in a predetermined spatial pattern; a beam selection unit (600) downstream of the beam splitting unit (500) in the beam direction, which is set up to relay a first number (Al) of the partial rays (T) along the optical path (400) in the direction of the flat product (2), and which is set up to deflect a second number (A2) of the partial beams (T) from the optical path (400); as well as a scanning unit (9), which is set up to image laser spots corresponding to the first number (Al) of the partial beams (T) on the flat product (2) and to perform a positioning and/or processing movement of the laser spots projected onto the flat product (2) within the processing field.

## Revendications

1. Procédé, destiné à fabriquer un produit plat (2) muni d'une structure perforée (1), comportant les étapes de procédé suivantes, consistant à :
a) mettre à disposition un produit plat (2) dans un réservoir (3) à produit plat ;
b) disposer le produit plat (2) mis à disposition dans une unité réceptrice (4) de produit plat ;
c) usiner au laser le produit plat (2), en utilisant un dispositif d'usinage au laser (5) : générer, orienter et appliquer un ou plusieurs faisceaux laser (6) pulsés sur une ou plusieurs zones à usiner dans un champ d'usinage prédéfini du produit plat (2), suite à quoi, dans le produit plat (2), sur la ou sur les zone(s) à usiner se constituent des ouvertures perforées (7), de préférence avec des diamètres de 500 nm à 10 µm, lesquelles mettent à disposition la structure perforée (1) ;
d) répéter en option l'étape de procédé c) dans un ou plusieurs champ(s) d'usinage supplémentaire(s),
**caractérisé en ce que** la génération, l'orientation et l'application de l'un ou des plusieurs faisceaux laser (6) pulsés à l'étape c) s'effectue en utilisant un dispositif d'usinage au laser (5), qui comprend :
une source de rayonnement laser (300), qui est configurée pour générer un faisceau laser (100) et pour l'émettre le long d'un chemin optique (400) dans la direction du produit plat (2) ; une unité de division (500) de faisceau, disposée en aval de la source de rayonnement laser (300) dans la direction du faisceau, qui est configurée pour diviser le faisceau laser (100) en une pluralité de faisceaux partiels (T), qui sont distribués dans un motif spatial prédéfini ; une unité de sélection (600) de faisceau, disposée en aval de l'unité de division (500) de faisceau dans la direction du faisceau, qui est configurée pour retransférer une premier nombre (A1) des faisceaux partiels (T) le long du chemin optique (400) dans la direction du produit plat (2) et qui est configurée pour dévier un deuxième nombre (A2) des faisceaux partiels (T) hors du chemin optique (400) ; ainsi qu'une unité de balayage (9), qui est configurée pour reproduire sur le produit plat (2) des points laser correspondant au premier nombre (A1) des faisceaux partiels (T) et pour réaliser un déplacement de positionnement et / ou d'usinage des points laser projetés sur le produit plat (2) à l'intérieur du champ d'usinage.

2. Procédé selon la revendication 1, lors duquel l'on utilise une unité réceptrice (4) de produit plat qui comporte un système de fixation à l'aide duquel le produit plat (2) peut être fixé lors de sa disposition dans l'unité réceptrice (4) de produit plat, le système de fixation étant notamment une plaque de serrage à vide, une plaque de serrage magnétique ou une plaque de serrage électrostatique.

3. Procédé selon la revendication 1 ou 2, le produit plat (2) étant un film métallique d'une épaisseur de matière préconisée de 5 µm à 100 µm, qui au moyen d'une unité de positionnement (8) de produit plat est alimenté pièce par pièce, par exemple sous la forme de coupons de film métallique ou en continu, en tant que bande de film métallique vers l'unité réceptrice (4) de produit plat.

4. Procédé selon l'une quelconque des revendications précédentes, le réservoir (3) à produit plat mettant à disposition un magasin pour une pluralité de coupons de films métalliques ou un rouleau, destiné au stockage de la bande de film métallique enroulée, avant ou après l'usinage au laser, un nombre de découpes de film métallique étant marqué avec des points de rupture théorique dans les coupons de film métallique ou dans la bande de film métallique, l'opération de marquage des points de rupture théorique comprenant un processus de gravure, un processus de poinçonnage, un processus de coupe ou un processus de gaufrage, l'opération de marquage des points de rupture théorique constituant un marquage de points de rupture théorique qui permet un détachement facilité des découpes de film métallique hors de la bande de film métallique et les découpes de film métallique marquées de points de rupture théorique présentant de préférence un contour de forme circulaire, d'un diamètre de 5 mm à 20 mm, notamment de 10 mm.

5. Procédé selon l'une quelconque des revendications précédentes, lors duquel l'on positionne l'unité réceptrice (4) de produit plat, avec le produit plat (2) disposé en son intérieur par rapport au dispositif d'usinage au laser (5), le positionnement comprenant un déplacement relatif de l'unité réceptrice (4) de produit plat par rapport au dispositif d'usinage au laser (5) et / ou un déplacement relatif du dispositif d'usinage au laser (5) par rapport à l'unité réceptrice (4) de produit plat, le positionnement s'effectuant au moins le long d'un axe Z (Z) s'écoulant à la perpendiculaire d'un plan (E) du produit plat, le positionnement s'effectuant avec une précision de positionnement de moins de 10 µm, notamment de moins de 5 µm.

6. Procédé selon l'une quelconque des revendications précédentes, lors duquel une vérification de la position focale du / des faisceaux laser orienté(s) sur le produit plat (2) s'effectue dans la direction de l'axe (Z) et dans le cas d'une divergence de la position focale au-delà d'une mesure prédéfinie, il est procédé à une correction de la position focale, la vérification de la position focale s'effectuant au moyen d'un ensemble de mesure qui comprend un ou plusieurs des capteurs suivants : un capteur de distance, un capteur laser confocal, un capteur caméra ou un interféromètre à lumière blanche et la correction de la position focale s'effectuant par une correction d'une position relative entre le produit plat (2) disposé dans l'unité réceptrice (4) de produit plat et le dispositif d'usinage au laser (5), pour corriger la position focale Z.

7. Procédé selon l'une quelconque des revendications précédentes, lors duquel un produit plat (2) mis à disposition est identifié avant ou après l'usinage au laser, en utilisant un système d'identification (10) au niveau d'une caractéristique d'identification notamment optique du produit plat (2) et est affecté à une catégorie de produit ou d'usinage, suite à l'affectation à une catégorie de produit ou d'usinage, un type déterminé d'un pré-usinage, de l'usinage au laser ou d'un post-usinage du produit plat (2) étant effectué, la caractéristique d'identification mettant à disposition de préférence un point de référence local pour l'usinage au laser.

8. Procédé selon la revendication 1, lors duquel, à la suite de l'étape de procédé d), un contrôle qualité est réalisé en ce qui concerne la structure perforée constituée, en utilisant notamment un procédé de lumière incidente ou un procédé de lumière transmise, de préférence, des éléments structurels identifiés comme étant défectueux par voie du contrôle qualité étant éliminés par tri par une unité de tri.

9. Procédé selon l'une quelconque des revendications précédentes, lors duquel, à la suite de l'étape de procédé d) l'on effectue un traitement ultérieur du produit plat (2) muni de la structure perforée, notamment en ce qui concerne un sectionnement total des découpes de film métallique marquées d'un point de rupture théorique des coupons de film métallique ou de la bande de film métallique, le sectionnement s'effectuant par gravure, poinçonnage, coupe ou gaufrage.

10. Procédé selon l'une quelconque des revendications précédentes, lors duquel l'on utilise une unité de désolidarisation qui est configurée pour désolidariser des découpes de film métallique ou des sections définies d'autre manière à partir de la bande de film métallique, après l'usinage au laser ou après l'usinage ultérieur, les produits plats, les découpes désolidarisées de film métallique ou les sections définies d'autre manière et désolidarisées étant placé(e)s au moyen d'une unité pick-and-place sur un support, notamment un film adhésif.

11. Système de fabrication, destiné à fabriquer un produit plat (2) muni d'une structure perforée (1), le système de fabrication étant conçu pour réaliser un procédé selon l'une quelconque des revendications 1 à 10, pourvu
a) d'un réservoir (3) à produit plat, pour le stockage du produit plat (2),
b) d'une unité réceptrice (4) de produit plat, qui est configurée pour recevoir le produit plat (2) ;
c) d'une unité de positionnement de produit plat, destinée à disposer le produit plat (2) dans l'unité réceptrice (4) de produit plat,
d) d'un dispositif d'usinage au laser (5), qui est configuré pour générer un ou plusieurs faisceaux laser (6) pulsés et pour l'(les) orienter et l'(les) appliquer sur un ou plusieurs zones à usiner dans un champ d'usinage prédéfini du produit plat (2), pour constituer dans le produit plat (2) sur l'une ou les plusieurs zones à usiner des ouvertures perforées (7), lesquelles mettent à disposition la structure perforée (1),
**caractérisé en ce que** le dispositif d'usinage au laser (5) comprend :
une source de rayonnement laser (300), qui est configurée pour générer un faisceau laser (100) et pour l'émettre le long d'un chemin optique ( 400) dans la direction du produit plat (2) ; une unité de division (500) de faisceau, disposée en aval de la source de rayonnement laser (300) dans la direction du faisceau, qui est configurée pour diviser le faisceau laser (100) en une pluralité de faisceaux partiels (T), qui sont distribués dans un motif spatial prédéfini ; une unité de sélection (600) de faisceau, disposée en aval de l'unité de division (500) de faisceau dans la direction du faisceau, qui est configurée pour retransférer un premier nombre (A1) des faisceaux partiels (T) le long du chemin optique (400) dans la direction du produit plat (2) et qui est configurée pour dévier un deuxième nombre (A2) des faisceaux partiels (T) hors du chemin optique (400) ; ainsi qu'une unité de balayage (9), qui est configurée pour reproduire sur le produit plat (2) des points laser correspondant au premier nombre (A1) des faisceaux partiels (T) et pour réaliser un déplacement de positionnement et / ou d'usinage des points laser projetés sur le produit plat (2) à l'intérieur du champ d'usinage.
